(19) Europäisches Patentamt
European Patent Office
Office européen des brevets

(11) EP 0 995 612 A1

(12) **EUROPEAN PATENT APPLICATION**
published in accordance with Art. 158(3) EPC

(43) Date of publication:
**26.04.2000 Bulletin 2000/17**

(21) Application number: **98931065.1**

(22) Date of filing: **13.07.1998**

(51) Int. Cl.[7]: **B41M 5/26**, G11B 7/24, C09K 9/02

(86) International application number:
**PCT/JP98/03123**

(87) International publication number:
**WO 99/03686 (28.01.1999 Gazette 1999/04)**

(84) Designated Contracting States:
**DE FR GB**

(30) Priority: **14.07.1997 JP 18807097**
**22.12.1997 JP 35280497**

(71) Applicants:
- **MATSUSHITA ELECTRIC INDUSTRIAL CO., LTD.**
  **Kadoma-shi, Osaka-fu, 571 (JP)**
- **Yamada Chemical Company, Ltd.**
  **Kyoto-shi, Kyoto-fu 601-8105 (JP)**

(72) Inventors:
- **HOSAKA, Tomiharu**
  **Yawata-shi, Kyoto 614-8031 (JP)**
- **TOSAKI, Yoshihiro**
  **Ibaraki-shi, Osaka 567-0834 (JP)**
- **TAKAHASHI, Katsuyuki**
  **Neyagawa-shi, Osaka 572-0019 (JP)**
- **KUNIEDA, Toshiaki**
  **Minoo-shi, Osaka 562-0042 (JP)**
- **DOI, Yukako**
  **Takatsuki-shi, Osaka 569-1121 (JP)**
- **TANIGUCHI, Masatoshi,**
  **380-302, Ebisugawacho**
  **Kyoto-shi, Kyoto 602-8032 (JP)**
- **KOBAYASHI, Noriko**
  **Kyoto-shi, Kyoto 612-8136 (JP)**
- **MURAI, Akiko**
  **Sakai-gun, Fukui 913-0043 (JP)**
- **IINUMA, Yoshiharu**
  **Yawata-shi, Kyoto 614-8364 (JP)**
- **HASE, Tomoyuki**
  **Kyoto-shi, Kyoto 612-8136 (JP)**

(74) Representative:
**Eisenführ, Speiser & Partner**
**Martinistrasse 24**
**28195 Bremen (DE)**

Remarks:
A correction of the translation of the description into English has been requested.

# (54) OPTICAL RECORDING MEDIUM AND METHOD OF PRODUCING THE SAME

(57) A write-once optical recording medium having on a substrate a recording layer on which information can be written and/or read out therefrom with a laser beam, where a proper tracking error signals is ensured over the whole substrate of the medium. The medium is adaptable to high information recording density. This medium is produced by forming a recording layer by vacuum depositing on the substrate a recording layer-constituting material containing a metal-containing azo compound having a weight-loss starting temperature or a decomposition temperature ranging from 300 to 500 °C.

Fig. 1

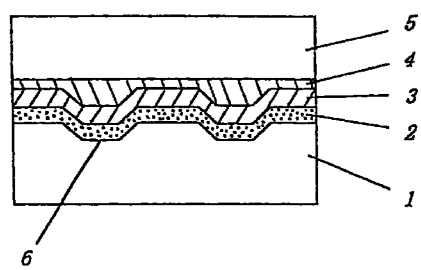


EP 0 995 612 A1

## Description

TECHNICAL FIELD

The present invention relates to an optical recording medium such as a tape, a disk, or a card for recording information by means of a light beams, particularly an optical recording medium in a form of a disk such as a compact disk (hereafter referred to also as CD) and a digital video disk (hereafter referred to also as DVD), and a method of producing the same.

BACKGROUND ART

In recent years, with the spread of CDs, a write-once type optical disk satisfying the CD standard (hereafter referred to also as CD-R) has been developed and used. The CD-R is typically constructed by using a transparent resin substrate having a spiral groove on one surface thereof, applying thereon a solution obtained by dissolving an organic dyestuff into an organic solvent (hereafter referred to as organic dyestuff solution) by means of a spin coater, then drying the solution to form a recording layer, disposing thereon a reflective layer formed by, for example sputtering gold, and disposing a protective layer formed by applying an ultraviolet-curable resin by means of a spin coater or the like and curing the resin (hereafter, the optical recording medium having the optical absorbing layer formed on the substrate by applying the organic dyestuff solution is referred to as an "application-type" one).

Recordation on the CD-R is performed by forming pits on the recording layer in accordance with information. The pits are formed by changing, for example, decomposing the organic dyestuff and/or by changing the refractive index of the dye stuff to change an optical path length through irradiating a laser beam having a wavelength of 780 nm from the substrate side to the recording layer. Reproduction of the information recorded on the CD-R is performed by detecting the changes in an amount of light reflected from the pits.

In recording information on the CD-R by means of a CD-R writer or the like, servo characteristics for rotation controlling along the groove of the substrate for a pick-up head are of importance. Therefore, for the CD-R, it is necessary to obtain a tracking error signal stably. The tracking error signal is greatly affected especially by a thickness difference of recording layers between on the groove portion and on the inter-groove portion of the substrate. Accordingly, upon producing the above-mentioned application-type CD-R, the following is carried out in order to ensure the tracking error signal.

When an organic dyestuff solution is applied for forming a recording layer on a substrate, the solution fills preferentially the groove of the substrate. For this reason, a substrate having a deep groove is utilized to ensure a thickness of the recording layer and a tracking error signal.

However, as the depth of the groove in the substrate increases, a radial inclination in the groove depth is liable to take place, such as a groove depth decreasing from the inner periphery towards the outer periphery of the substrate, due to the influence of the temperature and the fluidity of the molten resin when forming the substrate. Further, an inclination in the recording layer thickness is liable to take place in the radial direction of the substrate due to a rise in viscosity of the solution caused by evaporation of the solvent during the application of the organic dyestuff solution.

Therefore, an attempt is made to suppress the change of the tracking error signal in the radial direction of the substrate to ensure a necessary level of the tracking error signal by precisely adjusting the application conditions such as a type of the solvent to be used for the organic dyestuff solution, a viscosity of the organic dyestuff solution, rotation control of the spin coater, and surrounding environment condition during the production, and also the drying condition and the like upon forming the recording layer.

Recently, in order to achieve a further higher density of information, a DVD is developed to which a laser having a wavelength around 650 nm is irradiated. The DVD is produced by forming pits with a track pitch of 0.74 μm and the shortest pit length of 0.40 μm on a substrate having a thickness of 0.6 mm by means of a molding apparatus, forming a reflective layer thereon, and further sticking another resin substrate having a thickness of 0.6 mm using an adhesive material such as an ultraviolet-curable resin in order to ensure the hardness of the disk, in the same manner as the CD. Like the CD-R, a writable DVD-R is being developed.

In view of compatibility with the DVD, the DVD-R must include pits formed correspondingly to the information in a substrate having a small groove which has a track pitch of less than or equal to half of that in the CD-R and, in accordance therewith, has a smaller width. In this case, as the track pitch or the groove width of the substrate decreases, the inclination of the groove depth in the radial direction is further increased if the substrate has a deep groove. Accordingly, it is extremely difficult to ensure a necessary tracking error signal by the conventionally performed adjustment of the application condition of the organic dyestuff solution and the drying condition.

In the meantime, it has been already known in the art to adopt the vacuum vapor deposition method as a recording layer production method which is one of the dry processes without need for using a solvent. This method supposedly improves the uniformity of the thickness of the recording layer to be formed. However, a compounds used in

such a method is liable to be denatured, e.g. decomposed, by heating during vapor deposition, so that it may be difficult to record signals in the pits or to reproduce signals from the pits. This problem is significantly recognized if the pit length is decreased. Therefore, if an optical recording medium for a shortened pit length is obtained by vapor deposition to meet the high density information recording, the decrease in the reproduction output from the shortest pit will be large and, as a result, the resolution (reproduction output from the shortest pit / the reproduction output from the longest pit) falls, thereby raising a problem that the quality of reproduced signals is deteriorated.

## DISCLOSURE OF THE INVENTION

An object of the present invention is to provide an optical recording medium, particularly a write-once type optical recording medium, having a high resolution and being adapted to high density information density which ensures a proper tracking error signal and provides good-quality reproduced signals.

In the present invention, the aforementioned object is achieved by adopting a metal-containing azo compound having a specific weight-loss starting temperature or a specific decomposition temperature as a dyestuff which forms a recording layer, and by vapor-depositing the compound on a substrate.

In the first aspect, the present invention consists in an optical recording medium having a recording layer formed on a substrate, the recording layer allowing writing and/or reading information by a laser beam, wherein the recording layer is formed on the substrate by vapor-depositing a recording layer-constituting material comprising at least one metal-containing azo compound having a weight-loss starting temperature or a decomposition temperature of from 300 to 500 °C.

Here, the term "recording layer-constituting material" is used to generally refer to a material which forms the recording layer. Therefore, if the recording layer is formed by vapor-depositing not only the metal-containing azo compound having the aforementioned predetermined weight-loss starting temperature or decomposition temperature but also other compound(s) such as a compound for improving a property of the recording layer (for example, a light resistance improver, a stabilizer, or the like) and/or other dyestuff(s), the term "recording layer-constituting material" refers to all of them. Of course, in the present invention, the recording layer may be formed only with the metal-containing azo compound having the weight-loss starting temperature or the decomposition temperature within the range of 300 to 500 °C. In this case, the "recording layer-constituting material" refers only to the aforementioned metal-containing azo compound.

In the second aspect, the present invention consists in a method of producing an optical recording medium having a recording layer formed on a substrate, the recording layer allowing writing and/or reading information by a laser beam, wherein a step of forming the recording layer includes vapor-depositing a recording layer-constituting material comprising at least one metal-containing azo compound having a weight-loss starting temperature or a decomposition temperature of from 300 to 500 °C, on the substrate.

Typically, the vapor deposition is performed under a vacuum condition of not more than $10^{-3}$ Torr. When the recording layer is formed by vacuum vapor deposition, an organic dyestuff evaporated or sublimed from an evaporation source is deposited while following irregularities of the groove over the entire surface of the substrate to form a uniform film thereon. As a result of this, the thickness difference of the layers between on the groove portion of the substrate and on the inter-groove portion is determined by an initial depth of the groove in the substrate, so that the tracking error signal can be adjusted by the groove depth of the substrate (hereafter, the optical recording medium having the recording layer formed on the substrate by the vacuum vapor deposition of the dyestuff is referred to as a "vapor deposition type" one).

Thus, in the vapor deposition type, the same level of a tracking error signal as the application-type optical recording medium can be sufficiently obtained even if the groove of the substrate has a smaller depth than that of the groove of the application type. Accordingly, there will be little radial groove-depth inclination generated upon molding the substrate or little radial recording-layer thickness inclination caused by change in a solution viscosity upon applying the organic dyestuff solution. Thus, by forming the recording layer through the vacuum vapor deposition, stable properties with little change are obtained over the entire surface of the substrate.

In a recording layer of the conventional CD-R, cyanine-based organic dyestuffs are used. These dyestuffs can be adapted to shorter laser wavelengths used for the DVD, by adjusting the length of a methine chain in a molecule center, the kind of an aromatic ring or heterocycle at a molecule end, the kind of a substituent bonded thereto, or the like. However, since many of these have counter ions and are liable to be decomposed under the temperature condition of the vacuum vapor deposition, they cannot be used as they are. In other words, for the vacuum vapor deposition, dyestuffs that do not have counter ions are suitable, and particularly the later-mentioned metal-containing azo compounds that do not have counter ions, such as those used in the present invention, are suitable.

The dyestuff used in the present invention is the metal-containing azo compound having the weight-loss starting temperature or the decomposition temperature within the range of 300 to 500 °C, more preferably 320 to 470 °C, and still more preferably 330 to 450 °C. When the weight-loss starting temperature or the decomposition temperature is less than 300 °C, the difference between the sublimation or evaporation starting temperature and the weight-loss staring temperature or decomposition temperature is small, so that the dyestuff is easily decomposed, leading to poor forming the film by vapor deposition. On the other hand, when the weight-loss starting temperature or the decomposition temperature is higher than 500 °C, a high recordation power is needed for decomposing the dyestuff in writing information, which deteriorates the properties of the optical recording medium.

In the present invention, the weight-loss starting temperature is a temperature measured by thermogravimetry and refers to a temperature at which the loss in the weight of a sample (here, a dyestuff) starts when the sample is heated in a nitrogen atmosphere at a temperature elevation rate of 10 °C/min. The weight-loss starting temperature can be measured by a generally used thermogravimeter such as Thermogravimeter TGA-50 manufactured by Shimadzu Corporation.

Further, in the present invention, the decomposition temperature is a temperature measured by a differential scanning calorimetry (DSC) and refers to a temperature at which a sample (here, a dyestuff) begins to be chemically decomposed, i.e. a temperature at which a heat generation peak appears, when the sample is heated in an inert gas of 1 atm by raising a temperature at a constant rate.

As far as the metal-containing azo compound used in the present invention is concerned, the weight-loss starting temperature thereof is usually approximately the same as the decomposition temperature thereof. Therefore, as to the metal-containing azo compound, when one of the two temperatures is within the range of 300 to 500 °C, measurement of the other temperature is usually unnecessary.

Further, in the present specification, the sublimation or evaporation starting temperature refers to the following temperature of an evaporation source (evaporation vessel) containing a compound to be evaporated. The temperature is measured by a temperature monitor comprising a thermocouple or the like when the evaporation source is gradually heated under a low pressure (high vacuum) of not more than $10^{-3}$ Torr and the evaporation rate of the compound becomes 1 Å/s, which is measured by a thickness monitor of quartz oscillator type.

BRIEF DESCRIPTION OF THE DRAWINGS

Fig. 1 is an enlarged schematic view illustrating a portion of a cross section of an optical recording medium of the present invention; and
Fig. 2 is a graph showing relative values of tracking error signals of a vapor deposition type optical recording medium and an application-type optical recording medium in a radial direction produced in Examples.

Here, in Fig. 1, the reference numerals denote the following elements:

1...substrate, 2...recording layer, 3...reflective layer, 4...adhesive layer, 5...substrate, 6...groove.

EMBODIMENTS OF THE INVENTION

The recording layer of the optical recording medium of the present invention comprises at least one layer formed by vapor-depositing the recording layer-constituting material comprising at least one metal-containing azo compound having the weight-loss starting temperature or the decomposition temperature within the range of from 300 to 500 °C, on the substrate.

In the present invention, it is preferable to use the metal-containing azo compound having the decomposition temperature within the range of 300 to 500 °C , and the structure thereof is not specifically limited as long as this condition is satisfied.

The metal-containing azo compound preferably used in the present invention is a metal-containing azo compound represented by the following general formula (a) or (a'):

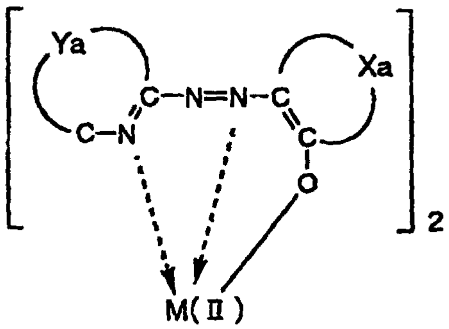

(a)

or

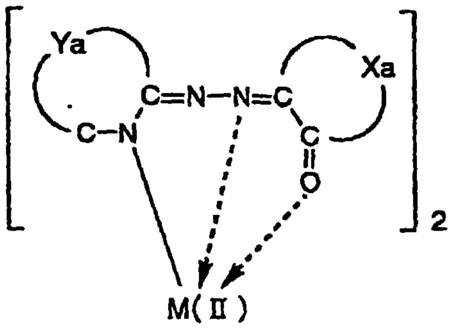

(a')

wherein M(II) is a bivalent metal, Xa is a substituted or non-substituted residue that forms a monocyclic or polycyclic aromatic ring together with carbon atoms that are adjacent thereto at its both ends, Ya is a substituted or non-substituted residue that forms a nitrogen-containing aromatic heterocycle together with a nitrogen atom and carbon atoms that are adjacent thereto at its both ends, and the substituents when present in these residues are independently selected from the group consisting of halogen atoms, substituted and non-substituted alkyl groups, substituted and non-substituted alkoxy groups, substituted and non-substituted alkylthio groups, substituted and non-substituted aryl groups, substituted and non-substituted aryloxy groups, substituted and non-substituted arylthio groups, nitro group, and amino groups; i.e. a complex of two azo compounds and a metal.

This metal-containing azo compound exhibits tautomerism as shown by the formula (a) or (a'). For simplicity in the following explanation, only one corresponding to (a) will be described, but it is intended to include also the other corresponding to (a').

In the aforementioned metal-containing azo compound, the metal M(II) is not specifically limited as long as it is a bivalent metal. It is selected, for example, from the group consisting of Zn, Ni, Cu, Mn, Fe, Co, Pd, Pt, Sn, and Mg, and especially Zn, Ni, Cu, or the like is preferable.

In the aforementioned metal-containing azo compound, the residue Xa is the substituted or non-substituted residue that forms the monocyclic or polycyclic aromatic ring together with the carbon atoms adjacent thereto at its both ends. Specifically, the residue Xa preferably forms a substituted or non-substituted benzene ring which is the monocyclic aromatic ring, or a substituted or non-substituted naphthalene or phenanthrene ring which is the polycyclic aromatic ring, together with the adjacent carbon atoms. Especially in the present invention, the polycyclic aromatic ring is preferably formed.

Here, the metal-containing azo compound may have a sulfur atom instead of the oxygen atom bonded to the carbon atom that is adjacent to the residue Xa. For example, the phenanthrene or naphthalene ring may be a thiophenanthrene or thionaphthalene ring.

In the general formula (a), Ya is the substituted or non-substituted residue that forms the nitrogen-containing aromatic heterocycle together with the nitrogen atom and the carbon atoms that are adjacent thereto at is both ends. The nitrogen-containing aromatic heterocycle may be either monocyclic or polycyclic. Specific examples of the nitrogen-containing aromatic heterocycles include a thiazolyl ring, a benzothiazolyl ring, a pyridine ring, a pyrimidine ring, and a pyrazine ring. Thus, in the present invention, the metal-containing azo compounds represented by, for example, the following chemical formulae (a1) to (a4) may be used:

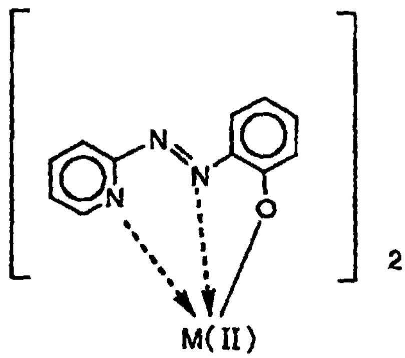

(a1)

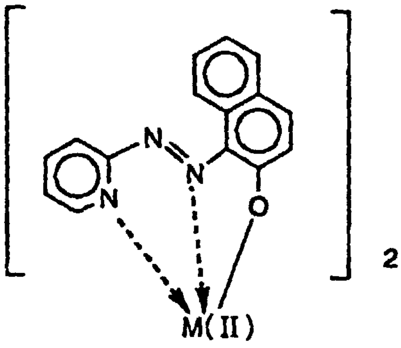

(a2)

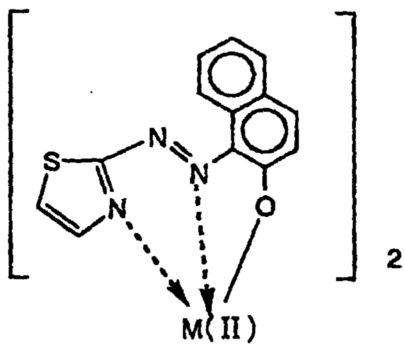

(a3)

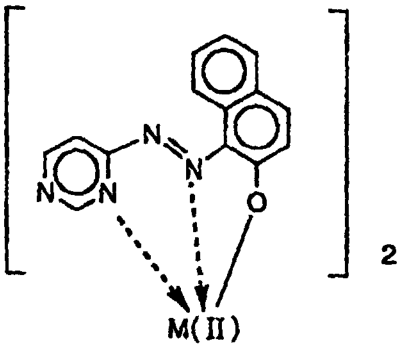

(a4)

Further , when the residue Xa or the residue Ya has a substituent(s) (instead of a hydrogen atom(s)) and the substituent(s) has a carbon atom(s), its carbon number is preferably 1 to 15, more preferably 1 to 9, still more preferably 1 to 3. The substituent may be, for example, one of the following:

(1) the halogen atom which may be fluorine, chlorine, bromine, or iodine;
(2) the substituted or non-substituted alkyl group which may be a straight-chain or branched group such as methyl, ethyl, propyl, butyl, pentyl, hexyl, heptyl, octyl, trifluoromethyl, trifluoroethyl, pentafluoropropyl group, or the like;
(3) the substituted or non-substituted alkoxy group which may be a straight-chain or branched group such as methoxy, ethoxy, propoxy, butoxy, pentyloxy, trifluoromethoxy, trifluoroethoxy, pentafluoropropoxy, bis(trifluoromethyl)propoxy group, or the like;
(4) the substituted or non-substituted alkylthio group which may be a straight-chain or branched group such as methylthio, ethylthio, *tert*-butylthio group, or the like;
(5) the substituted or non-substituted aryl group which may be phenyl, naphthyl, pyrrolyl group, or the like;
(6) the substituted or non-substituted aryloxy group which may be phenoxy group or the like; and
(7) the substituted or non-substituted amino group which may be amino, diethylamino group, or the like.

In the general formula (a), each residue may have one or more of those substituents as described above. For example, in the compounds represented by the aforementioned chemical formulae (a1) to (a4), the aforementioned substituents may be bonded to one or more of any carbon atoms.

In the present invention, it is particularly preferable to use a metal-containing azo compound in which a specific substituent is bonded to a specific position. Such a compound is represented by the following general formula (b) or (b'):

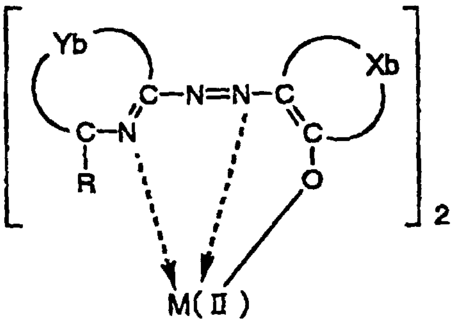

or

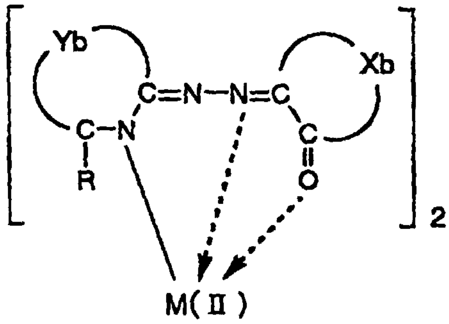

(b) (b')

wherein M(II) is a bivalent metal, R is selected from the group consisting of substituted and non-substituted alkyl groups, substituted and non-substituted alkoxy groups, substituted and non-substituted alkylthio groups, substituted and non-substituted aryl groups, substituted and non-substituted aryloxy groups, and substituted and non-substituted arylthio groups, Xb is a substituted or non-substituted residue that forms a monocyclic or polycyclic aromatic ring together with carbon atoms that are adjacent thereto at its both ends, Yb is a substituted or non-substituted residue that forms a nitrogen-containing aromatic heterocycle together with a nitrogen atom and carbon atoms that are adjacent thereto at its both ends, and the substituents when present in these residues are independently selected from the group consisting of halogen atoms, substituted and non-substituted alkyl groups, substituted and non-substituted alkoxy groups, substituted and non-substituted alkylthio groups, substituted and non-substituted aryl groups, substituted and non-substituted aryloxy groups, substituted and non-substituted arylthio groups, nitro group, and amino groups.

The general formula (b) and the general formula (b') are tautomeric to each other. For simplicity in the following explanation, only one corresponding to (b) will be described, but it is intended to include also the other corresponding to (b').

The general formula (b) is characterized by having the substituent R at a specific position of the aromatic heterocycle, i.e. at the carbon atom bonded to the nitrogen atom which is adjacent to the another carbon atom that is bonded to the azo group, and the other features are the same as those of the general formula (a). Accordingly, the explanation on the residue Xb will be omitted here by citing the aforementioned explanation on the residue Xa.

The group R bonded to the carbon adjacent to the residue Yb is a group having 1 to 15 carbon atoms, preferably 1 to 9 carbon atoms, more preferably 1 to 5 carbon atoms, and most preferably 1 to 3 carbon atoms. In the present invention, a preferable group R is, for example, an alkyl group having 1 to 9 carbon atoms; a more preferable group R is an alkyl group having 1 to 5 carbon atoms; and a most preferable group R is an alkyl group having 1 to 3 carbon atoms. The group R may be straight-chain or branched. A preferable substituent R is specifically methyl, ethyl, butyl, pentyl, hexyl, heptyl, octyl, methoxy, ethoxy, propoxy, butoxy. pentyloxy, aryloxy (such as phenoxy), methylthio, ethylthio, butylthio, arylthio (such as phenylthio), or phenyl group.

The substituent R optionally has a substituent. It is more preferable that at least one hydrogen atom of the group R is substituted with a halogen atom (particularly a fluorine atom). In an especially preferable embodiment, R is fluoromethyl (such as trifluoromethyl), fluoroethyl (such as trifluoroethyl), fluoropropyl (such as pentafluoropropyl), fluoromethoxy (such as trifluoromethoxy), fluoroethoxy (such as trifluoroethoxy), fluoropropoxy (such as bis(trifluoromethyl)propoxy or 2,2,3,3,3-pentafluoropropoxy), or fluoromethylphenoxy (such as 4-trifluoromethylphenoxy) group.

Like the residue Ya, the residue Yb forms an aromatic heterocycle together with the nitrogen atom and the carbon atoms that are adjacent thereto at its end. Specifically, the residue Yb preferably forms a pyridine ring, a pyrimidine ring, a pyrazine ring, a triazine ring, or a thiazolyl ring.

The metal-containing azo compound represented by the general formula (b) is characterized by having the substituent R at the specific position of the heterocycle bonded to the azo group, i.e. at the carbon atom bonded to the nitrogen atom which is adjacent to another carbon atom bonded to the azo group. For example, if the aromatic heterocycle is a pyridine ring, a pyrimidine ring, or a pyrazine ring, the substituent R is bonded to the 6-position carbon (in case where the carbon atom bonded to the azo group is the 2-position carbon); and if the aromatic heterocycle is a thiazolyl ring, the substituent R is bonded to the 4-position carbon (in case where the sulfur atom is the 1-position atom, and the carbon atom bonded to the azo group is the 2-position carbon).

More specifically, in a preferred embodiment of the compound represented by the general formula (b), the residue Xb forms a naphthalene ring together with the adjacent carbon atoms, and the residue Yb forms a pyridine ring together with the nitrogen atom and the carbon atoms that are adjacent thereto. Thus, the metal-containing azo compound is a complex of (6-substituted-2-pyridylazo)naphthol and a bivalent metal, which is represented by the formula

(b1):

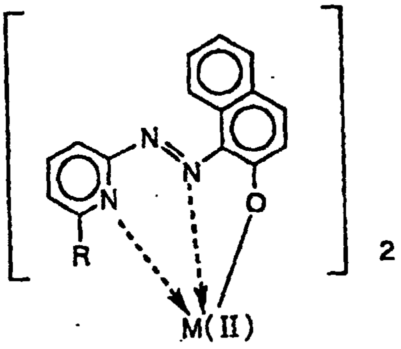

(b1)

wherein R and M(II) have the same meanings as mentioned above.

In another preferred embodiment, the residue Xb forms a phenanthrene ring together with the adjacent carbon atoms, and the residue Yb forms a pyridine ring (or a pyridyl group) together with the nitrogen atom and the carbon atoms that are adjacent thereto. Thus, the metal-containing azo compound is a complex of (6-substituted-2-pyridylazo)phenanthrol and a bivalent metal, which is represented by the formula (b2):

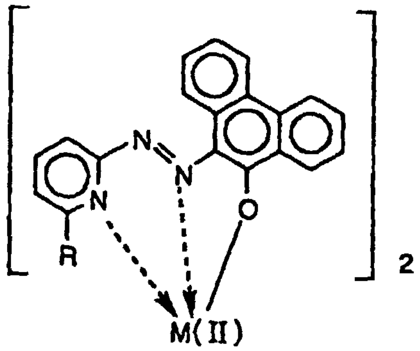

(b2)

wherein R and M(II) have the same meanings as mentioned above.

Further, the metal-containing azo compound, in the formula (b1) or the formula (b2), may have a pyrimidinyl group (or a pyrimidine ring) represented by the following formula:

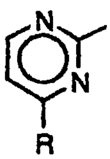

or

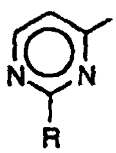

wherein R has the same meaning as mentioned above; instead of the pyridyl group.

In addition, the metal-containing azo compound, in the formula (b1) or the formula (b2), may have a pyrazinyl group (or a pyrazine ring) represented by the following formula:

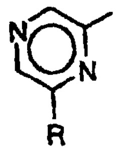

wherein R has the same meaning as mentioned above; instead of the pyridyl group.

Further, the metal-containing azo compound, in the formula (b1) or the formula (b2), may have a triazinyl group (or a triazine ring) represented by the following formula:

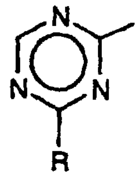

wherein R has the same meaning as mentioned above; instead of the pyridyl group.

In addition, the metal-containing azo compound in the formula (b1) or the formula (b2) may have a thiazolyl group (or a thiazole ring) represented by the following formula:

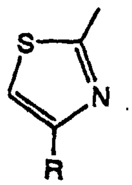

wherein R has the same meaning as mentioned above; instead of the pyridyl group.

In the compound represented by the general formula (b), the residue Xb or the residue Yb may have a substituent(s) instead of a hydrogen atom(s). Explanation on such a substituent is the same as already made in the explanation on the residue Xa and the residue Ya, and the detailed explanation will be omitted here by citing the previous explanation.

As described above, the preferable examples of the metal-containing azo compound used in the present invention have been shown. Besides these, it is possible to use, for example, a compound represented by the following general formula (c), (d) or (d'):

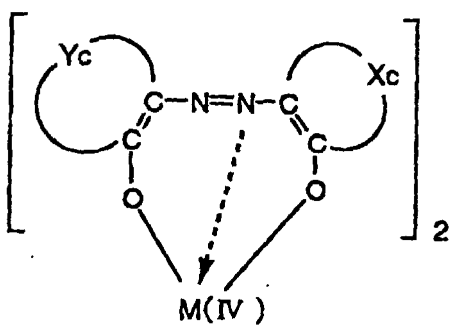

(c)

wherein M(IV) is a tetravalent metal, Xc and Yc each is a substituted or non-substituted residue that forms a monocyclic

or polycyclic aromatic ring together with carbon atoms that are adjacent thereto at its both ends, and the substituents when present in these residues are independently selected from the group consisting of halogen atoms, substituted and non-substituted alkyl groups, substituted and non-substituted alkoxy groups, substituted and non-substituted alkylthio groups, substituted and non-substituted aryl groups, substituted and non-substituted aryloxy groups, substituted and non-substituted arylthio groups, nitro group, and amino groups;

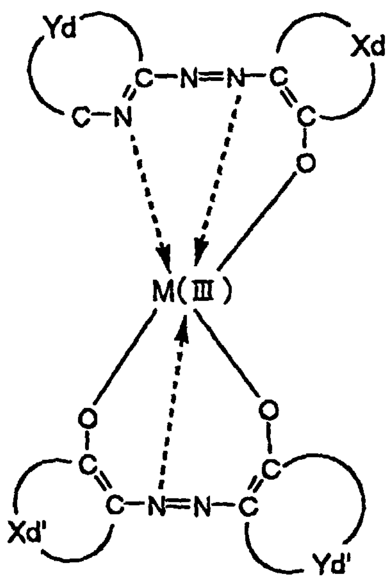

or

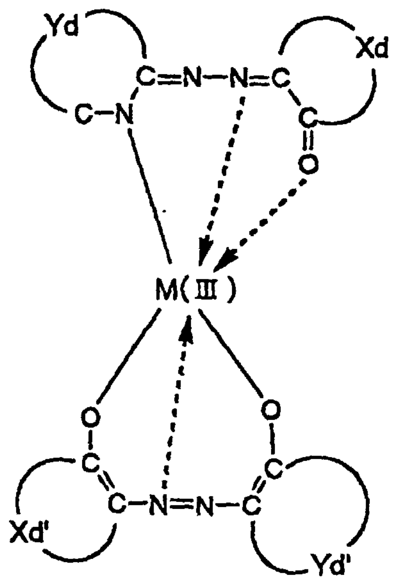

(d) (d')

wherein M(III) is a trivalent metal, Xd, Xd', and Yd' each is a substituted or non-substituted residue that forms a monocyclic or polycyclic aromatic ring together with carbon atoms that are adjacent thereto at its both ends, Yd is a substituted or non-substituted residue that forms a nitrogen-containing aromatic heterocycle together with a nitrogen atom and carbon atoms that are adjacent thereto at its both ends, and the substituents when present in these residues are independently selected from the group consisting of halogen atoms, substituted and non-substituted alkyl groups, substituted and non-substituted alkoxy groups, substituted and non-substituted alkylthio groups, substituted and non-substituted aryl groups, substituted and non-substituted aryloxy groups, substituted and non-substituted arylthio groups, nitro group, and amino groups.

Each compound has a structure in which a metal is bonded to two azo compounds having an azo group to which each end an aromatic ring or a heterocycle is bonded. Here, the general formulae (d) and (d') are tautomers. For simplicity in the following explanation, only one corresponding to (d) will be described, but it is intended to include also the other corresponding to (d').

In the general formulae (c) and (d), M represents a metal, and the Roman numeral in the parentheses on the right side thereof represents an oxidation number of the metal. Accordingly, M is a tetravalent metal in the general formula (c), and M is a trivalent metal in the general formula (d). The trivalent metal to be used may be, for example, Al, Ga, In, or the like. The tetravalent metal to be used may be, for example, Ti, V, Si, Ge, Sn(IV), or the like.

Explanation on the residues Xc, Yc, Xd, Xd', and Yd' in the general formulae (c) and (d) can be made by citing the explanation on Xa in the general formula (a), and explanation on the residue Yd in the general formula (d) can be made by citing the explanation on Ya in the general formula (a). Thus, the detailed explanation thereof will be omitted here.

The residue(s) in the general formula (c) or (d) may have one or more substituents, which can be selected from those given as the examples of the substituents for the residue Xa and the residue Ya in the previous explanation on the general formula (a).

Preferable embodiments of the general formulae (c) and (d) include, for example, those represented by the following chemical formulae (c1) and (d1):

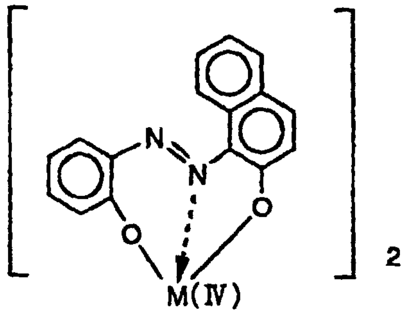

(c1)

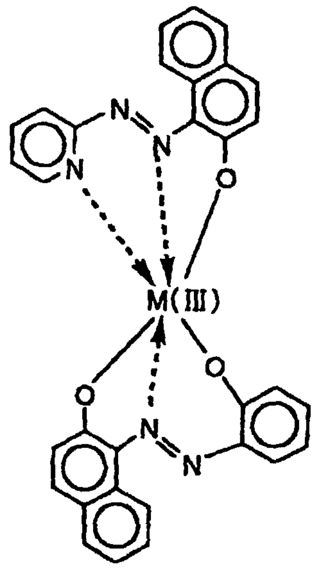

(d1)

In the present invention, the metal-containing azo compound having the decomposition temperature of 300 to 500 °C preferably has a sublimation or evaporation rate of not less than 200 Å/min. Here, the sublimation or evaporation rate refers to the maximum amount (or thickness) of a film formed per one minute, as determined by measuring with a film thickness monitor of a quartz oscillator type the change in the thickness of the film formed when 0.1 g of a dyestuff is evaporated by heating an evaporation source in a high vacuum of not more than $10^{-3}$ Torr at a temperature elevation rate of 40 °C/min.

Generally, in view of the productivity, the rate of vapor-depositing the recording layer-constituting material, i.e. the film forming rate (film forming speed), is preferably set at not less than about 1000 Å/min. For this purpose, the metal-containing azo compound must be heated. Therefore, if the sublimation or evaporation rate of the compound is small, a considerable amount of heat is required in increasing the film forming rate. This results in a disadvantage that the heating temperature of the metal-containing azo compound approaches to its decomposition temperature, causing the denaturing of the metal-containing azo compound to be easily started. If the metal-containing azo compound is denatured, recordation/reproduction of the signals of short pits will be particularly difficult, leading to deteriorated properties of the optical recording medium such as low resolution. Accordingly, it is preferable that the metal-containing azo compound used in the present invention is somewhat easily sublimed or evaporated.

The optical recording medium of the present invention comprises a recording layer, a reflective layer, and an adhesive layer (protective layer) that are successively formed on a substrate. The recording layer comprises at least one metal-containing azo compound having the weight-loss starting temperature or the decomposition temperature within the range of 300 to 500 °C. Therefore, the recording layer may contain two or more kinds of the aforementioned metal-containing azo compounds, and may also contain at least one of other known components used as a dyestuff

and/or components that improve the properties of the recording layer (for example, a light resistance improver or a stabilizer), as long as those specified conditions are satisfied, the recording layer is formed smoothly by the vapor deposition, and the properties of the optical recording medium are not deteriorated.

Next, a method of producing the optical recording medium of the present invention will be explained. The method of producing the optical recording medium of the present invention is characterized in that the step of forming its recording layer comprises vapor-depositing the recording layer-constituting material comprising the aforementioned metal-containing azo compound, on a substrate.

The vapor deposition is also referred to as vacuum vapor deposition. In the present invention, the recording layer is formed by fixedly bonding a thin film onto a substrate through heating a dyestuff under a high vacuum to evaporate the dyestuff after melting it or directly subliming the dyestuff. When the recording layer is formed by the vacuum vapor deposition, the organic dyestuff evaporated or sublimed from an evaporation source is deposited to form a uniform film over the entire surface of the substrate which film follows the groove shape of the substrate.

Since the metal-containing azo compound having the decomposition temperature from 300 to 500 °C , which is used in the present invention, typically has a sublimation or evaporation starting temperature within the range of 100 to 300 °C, the temperature of heating the metal-containing azo compound is preferably set at a temperature lower than the decomposition temperature by 50 to 100 °C upon the vapor deposition. Especially, when the sublimation or evaporation rate of the metal-containing azo compound is not less than 200 Å/min, a sufficient film forming rate can be achieved even if the heating temperature is set as described above, whereby the optical recording medium can be produced with good productivity.

Generally, a suitable film forming rate is from 200 to 4000 Å/min. This rate is achieved by suitably adjusting the operation conditions such as the operation pressure, the heating temperature, and the amount of heat to be added. In adjusting the operation conditions, care should be taken not to denature or decompose the dyestuff.

Such a vapor deposition method is known in the art, and a more detailed explanation is unnecessary. For the details, reference is made, for example, to Japanese Laid-open Patent Publication No. 54-164627/1979 disclosing a method of vapor-depositing a phthalocyanine dye on a substrate, the disclosure of which is incorporated herein by the reference.

Next, a concrete construction of the optical recording medium of the present invention will be explained with reference to the drawing.

The optical recording medium of the present invention comprises a substrate (1) made of a transparent resin such as polycarbonate, with a spiral groove (6) formed on one surface of the substrate. The recording layer (2) comprising the metal-containing azo compound and a reflective layer (3) made of gold or the like are successively formed on the surface on which the groove (6) is formed. A protective layer (4) made of an ultraviolet-curable resin or the like may be formed thereon. Alternatively, a protective layer made of an ultraviolet-curable resin may be formed as an adhesive layer (4) and a substrate (5) made of polycarbonate may be adhered thereon.

The substrate (1) is preferably transparent to a laser beam, i.e. a substrate that transmits the laser beam, and may be made of a glass or a plastic. For example, the substrate may be formed of an acrylic resin, an epoxy resin, a polyolefin resin, a polycarbonate resin, or a material having optical and mechanical properties equivalent thereto. The substrate may be a simple plate or a composite plate. If the substrate is a composite plate, it may be a laminate of stuck layers. Further, the substrate (5) may be made of the same material as the substrate (1) or of another material as long as it does not deteriorate the mechanical properties of an optical recording medium.

In the optical recording medium of the present invention, the substrate (1) has the spiral groove (6). Generally, the ratio of the groove width (μm) thereof and the track pitch (which may hereafter be abbreviated as TP) (μm), and the groove depth (nm) in case where the wavelength of the laser beam is represented by λ (nm) and the refractive index of the substrate is represented by "n", are preferably within the following ranges:

$$0.25 \leq \text{groove width/TP} \leq 0.45$$

$$0.2\lambda/(4n) \leq \text{groove depth} \leq 0.8\lambda/(4n)$$

When the groove width/TP is smaller than 0.25, the tracking error signal generally decreases, whereas when the groove width/TP is larger than 0.45, the radial contrast generally decreases, whereby the properties of the optical recording medium are deteriorated. A more preferable groove width/TP is from 0.30 to 0.40.

Further, when the groove depth is smaller than 0.2λ/(4n), the tracking error signal generally decreases, whereas when the groove depth is larger than 0.8λ/(4n), the reflectivity generally decreases, whereby the properties of the optical recording medium are deteriorated. A more preferable range is from 0.3λ/(4n) to 0.6λ/(4n).

Here, in this specification, the TP, the groove width, and the groove depth are used to mean the meanings which are conventionally used in the field of art.

The preferable dyestuff constituting the recording layer (2) of the optical recording medium of the present

invention and the method of forming the recording layer are as described above. Here, the metal-containing azo compounds to be used in the recording layer of the optical recording medium of the present invention are not specifically limited to those shown above. Two or more kinds of these metal-containing azo compounds may be used for a mixture layer or laminated layers as long as they do not deteriorate the properties of the optical recording medium. Furthermore, other dyestuff may be used in combination, and it is possible to use, for example, one or more dyestuffs selected from polymethine dyes (cyanine dyes, merocyanine dyes, styryl dyes, squarilium dyes, and aminovinyl dyes) triphenylmethane dyes, fluorane dyes, quinone dyes, cationic dyes, macrocyclic azaannulene dyes (phthalocyanine dyes, naphthalocyanine dyes, porphyrin dyes and subphthalocyanine dyes), indophenol dyes, condensed ring dyes such as perylene, and others, in the mixture layer or the laminated layers.

The recording layer made of the mixture of two or more kinds of dyes is formed by vapor depositing the dyes mixed beforehand or by multi-element vapor deposition. Here, the multi-element vapor deposition refers to the vapor deposition performed by using a plurality of evaporation sources and evaporating or subliming the dyes simultaneously from the evaporation sources. The recording layer in the form of the laminate is formed by repetition of vapor deposition steps.

Generally, in the present invention, the total thickness of the recording layer (2) is preferably within the range of 40 to 300 nm, and more preferably within the range of 80 to 250 nm, irrespective of the type of the recording layer-constituting material and/or the method of forming the recording layer. When the recording layer (2) has a thickness smaller than 40 nm, the output from the optical recording medium is generally small, whereas when the thickness is larger than 300 nm, the reflectivity generally decreases, thereby deteriorating the properties of the optical recording medium.

The reflective layer (3) can be formed by using a material having a high reflectivity and an excellent environment, such as humidity, resistance. For example, the reflective layer (3) can be formed of Au, Ag, Al, Cu, Cr, Pt, Ni, Ti, or an alloy thereof by sputtering , vacuum vapor deposition, or the like. Among these, it is preferable to use Au, Ag, Al, or an alloy thereof. For adaptation to a laser beam of a shorter wavelength, it is preferable to use Ag and/or Al having a small change in the reflectivity. The reflective layer (3) preferably has a thickness of 30 to 200 nm, and more preferably 50 to 100 nm. When the reflective layer has a thickness smaller than 30 nm, the reflectivity generally decreases, whereas when the thickness is larger than 200 nm, the reflectivity is saturated, which is disadvantageous in terms of costs and productivity.

The adhesive layer (or protective layer) (4) can be formed of an ultraviolet-curable resin made of a polymer material generally used as an adhesive layer, for example, one or more materials selected from an epoxy resin, a urethane resin, an acrylic resin, a silicone resin, and the like.

Basically, the materials other than the metal-containing azo compound to be used in the recording layer may be any known ones as long as they do not deteriorate the properties of an optical recording medium.

EXAMPLES

Hereafter, Examples will be described. However, the present invention is not limited to these.

Examples will be described by dividing them into production of an azo compound, production of a complex of the azo compound and a metal, and production of an optical recording medium.

Here, in the synthesis of the complexes, the obtained compound was identified with the use of mass spectrometry, NMR, and elementary analysis in each synthesis so as to confirm that the intended compound was obtained.

<u>Production of azo compound</u>

<u>Production of Azo compound-1</u>: 1-(4-methyl-2-pyridylazo)-2-naphthol

A reaction flask was loaded with 2-amino-4-methylpyridine (16g), ethanol (50 ml), and sodium ethoxide (11g), followed by dropwise addition of isopentyl nitrite (17g) to the flask in 30 minutes with stirring.

After the resultant mixture was further stirred for one hour at room temperature, heating was started and the mixture was stirred at 75 to 80 °C for three hours. Thereafter, the heating was stopped, and the reaction mixture was cooled to room temperature, followed by dropwise addition of 2-naphthol (13g) dissolved in ethanol (15 ml) in 50 minutes to the mixture.

The resultant mixture was stirred at room temperature for one hour, heated, and stirred at 75 to 80 °C for additional two hours, followed by stopping the heating and then leaving the mixture to stand overnight. The reaction mixture was filtrated to remove insoluble components, and the filtrate was condensed by an evaporator for solidification. The resultant was dissolved in ethyl acetate (100 ml) and, after being successively washed with an aqueous solution of sodium hydroxide and water, the ethyl acetate layer (phase) was condensed by an evaporator, followed by addition of methanol to the residue for crystallization. The resultant was filtrated and the crystals were dried to give intended red

orange crystals (2.7g).

Production of Azo compound-2: 1-(2-pyridylazo)-2-naphthol

A reaction flask equipped with a cooling tube (reflux condenser) and a stirrer was loaded with 2-aminopyridine (15g), ethanol (50 ml), and sodium ethoxide (11g), followed by dropwise addition of isopentyl nitrite (16g) to the flask in 30 minutes with stirring.
The resultant mixture was processed in the same manner as the method for obtaining the aforementioned Azo compound-1, thereby to give intended red orange crystals (4.0g).

Production of Azo compound-3: 1-(3-chloro-5-(trifluoromethyl)-2-pyridylazo)-2-naphthol

A reaction flask was loaded with 3-chloro-5-(trifluoromethyl)-2-aminopyridine (4.0g), ethanol (13 ml), and sodium ethoxide (1.4g), followed by dropwise addition of isopentyl nitrite (2.9g) to the flask in 30 minutes with stirring. After the dropwise addition was ended, heating was started and the mixture was stirred at 75 to 80°C for four hours.
The heating was stopped, and the reaction mixture was cooled to room temperature, followed by dropwise addition of 2-naphthol (1.7g) dissolved in ethanol (5 ml) to the mixture in one hour. The resultant mixture was stirred at room temperature for one hour, heated, and stirred at 75 to 80 °C for additional one hour, followed by stopping the heating and then leaving the mixture to stand overnight. The reaction mixture was filtrated to remove insoluble components, and the filtrate was condensed by an evaporator. The residue was dissolved in ethyl acetate (100 ml) and, after being successively washed with an aqueous solution of sodium hydroxide and water, the ethyl acetate layer was condensed by an evaporator, followed by addition of methanol to the residue for crystallization. The resultant was filtrated and the crystals were dried to give intended red orange crystals (2.1g).

Production of Azo compound-4: 1-(5-chloro-2-pyridylazo)-2-naphthol

A reaction flask was loaded with 5-chloro-2-aminopyridine (4.0g), ethanol (10 ml), and sodium ethoxide (1.1g), followed by dropwise addition of isopentyl nitrite (4.4g) to the flask in 30 minutes with stirring. After the dropwise addition was ended, heating was started and the mixture was stirred at 75 to 80 °C for four hours.
The heating was stopped, and the reaction mixture was cooled to room temperature, followed by dropwise addition of 2-naphthol (2.2g) dissolved in ethanol (4 ml) in 30 minutes to the mixture. The resultant mixture was stirred at room temperature for one hour, heated, and stirred at 75 to 80 °C for additional five hours, followed by stopping the heating and then leaving the mixture to stand overnight. The reaction mixture was filtrated to remove insoluble components, and the filtrate was condensed by an evaporator. The residue was dissolved in ethyl acetate (100 ml) and, after being successively washed with an aqueous solution of sodium hydroxide, dilute sulfuric acid, and water, the ethyl acetate layer was condensed by an evaporator, followed by addition of methanol to the residue for crystallization. The resultant was filtrated and the crystals were dried to give intended red orange crystals (1.5g).

Production of Azo compound-5: 1-(2-thiazolylazo)-2-naphthol

A reaction flask equipped with a cooling tube and a stirrer was loaded with 2-aminothiazole (3.0g) and a 62% aqueous solution of sulfuric acid (24g), and the reaction flask was cooled to 0 °C while dissolving 2-aminothiazole and stirring. To the resultant, a 45% sulfuric acid solution of nitrosyl sulfuric acid (8.5g) was dropwise added at 0 to 5 °C in one hour. After the dropwise addition was ended, the mixture was stirred at that temperature for 30 minutes.
The resultant liquid was dropwise added to a mixed solution of 2-naphthol (4.3g) and a 16% aqueous solution of sodium hydroxide (200 ml) at 0 to 10 °C in three hours. After the dropwise addition was ended, the mixture was stirred at 10 to 20 °C for one hour. The reaction mixture was neutralized with dilute sulfuric acid and filtrated to yield crystals, which were washed with water and then dried to give intended red orange crystals (6.1g).

Production of Azo compound-6: 1 -(6-methyl-2-pyridylazo)-2-naphthol

A reaction flask equipped with a cooling tube and a stirrer was loaded with 2-amino-6-methylpyridine (25g), ethanol (125 ml), and sodium ethoxide (4.7g), followed by dropwise addition of isopentyl nitrite (27g) to the flask in 30 minutes with stirring at room temperature. The resultant mixture was heated and stirred at 75 to 80 °C for four hours for reaction. Thereafter, the heating was stopped, and the reaction mixture was cooled to room temperature, followed by dropwise addition of 2-naphthol (16.5g) dissolved in ethanol (50 ml) in 30 minutes to the mixture.
The resultant mixture was stirred at room temperature for one hour, heated, and stirred at 75 to 80 °C for additional two hours, followed by stopping the heating and then leaving the mixture to stand overnight. The reaction mixture was filtrated to remove insoluble components, and the filtrate was condensed by an evaporator for solidification. The resultant was dissolved in ethyl acetate (500 ml) and, after being successively washed with an aqueous solution of sodium hydroxide and water, the ethyl acetate layer was collected and condensed by an evaporator, followed by addition of methanol to the residue for crystallization. The resultant was filtrated and the crystals were dried to give red orange crystals (2.1g).

Production of Azo compound-7: 1 -(4, 6-dimethyl-2-pyridylazo)-2-naphthol

A reaction flask equipped with a cooling tube and a stirrer was loaded with 2-amino-4,6-dimethylpyridine (5g), ethanol (25 ml), and sodium ethoxide (0.9g), followed by dropwise addition of isopentyl nitrite (5.2g) to the flask in 30 minutes with stirring at room temperature. The resultant mixture was heated and stirred at 75 to 80 °C for three hours. Thereafter, the heating was stopped, and the reaction mixture was cooled to room temperature, followed by dropwise addition of 2-naphthol (3.3g) dissolved in ethanol (10 ml) in 30 minutes to the mixture.

The resultant mixture was stirred at room temperature for one hour, heated, and stirred at 75 to 80 °C for additional five hours, followed by stopping the heating and then leaving the mixture to stand overnight. The reaction mixture was filtrated to remove insoluble components, and the filtrate was condensed by an evaporator for solidification. The resultant solid was dissolved in ethyl acetate (100 ml) and, after being successively washed with an aqueous solution of sodium hydroxide and water, the ethyl acetate layer was condensed by an evaporator, followed by addition of methanol to the residue for crystallization. The resultant was filtrated for collection and the crystals were dried to give intended red orange crystals (0.22g).

Production of Azo compound-8: 1 -(3-chloro-4,6-dimethyl-2-pyrimidinylazo)-2-naphthol

A reaction flask equipped with a cooling tube and a stirrer was loaded with 6-amino-5-chloro-2,4-dimethylpyrimidine (25g), ethanol (130 ml), and sodium ethoxide (13g), followed by dropwise addition of isopentyl nitrite (25g) to the flask in 30 minutes with stirring at room temperature.

The resultant mixture was heated and stirred at 75 to 80 °C for four hours. Thereafter, the heating was stopped, and the reaction mixture was cooled to room temperature, followed by dropwise addition of 2-naphthol (16g) dissolved in ethanol (20 ml) in 30 minutes to the mixture.

The resultant mixture was heated again and stirred at 75 to 80 °C for 3.5 hours, followed by stopping the heating and then leaving the mixture to stand overnight. The reaction mixture was filtrated to remove insoluble components, and the filtrate was condensed by an evaporator. The residue was dissolved in ethyl acetate (300 ml) and, after being successively washed with an aqueous solution of sodium hydroxide and water, the ethyl acetate layer was condensed by an evaporator, followed by addition of methanol to the residue for crystallization. The resultant was filtrated for collection and the crystals were dried to give intended crystals (0.5g).

Production of Azo compound-9: 9-[6-(2,2,3,3,3-pentafluoropropoxy)-2-pyridylazo]-10-phenanthrol

(1) Production of 2-fluoro-6-(2,2,3,3,3-pentafluoropropoxy)pyridine

A reaction flask equipped with a cooling tube and a stirrer was loaded with 2,2,3,3,3-pentafluoropropanol (3.9g), anhydrous potassium carbonate (4.3g), and dimethylformamide (10 ml), followed by stirring at room temperature for 10 minutes. To this mixture was dropwise added 2,6-difluoropyridine (3.0g) dissolved in dimethylformamide (7 ml) in one hour. Thereafter, the temperature was raised to 60 °C, and the mixture was stirred for six hours for reaction.

Water was added to the reaction mixture, and extraction was carried out with hexane, followed by adding magnesium sulfate to the extracted liquid for drying. After filtration to remove magnesium sulfate, hexane was removed by an evaporator and an intended oil (4.5g) was obtained.

(2) Production of 2-hydrazino-6-(2,2,3,3,3-pentafluoropropoxy)pyridine

A reaction flask was loaded with 2-fluoro-6-(2,2,3,3,3-pentafluoropropoxy)pyridine (4.0g) obtained in (1) and ethanol (15 ml), and the mixture was heated up to 40 °C with stirring. To this, hydrazine monohydrate (3.3g) was dropwise added in 30 minutes. The temperature of the mixture was raised to the reflux temperature, followed by stirring for six hours. Thereafter, the heating was stopped, and the reaction mixture was condensed by an evaporator. Then, ethyl acetate and water were added and, after shaking with a separating funnel, the mixture was separated to collect the ethyl acetate layer.

To the resultant, magnesium sulfate was added for drying, and then magnesium sulfate was removed by filtration. The filtrate was condensed by an evaporator to give an intended oil (1.5g).

(3) Production of 9-[6-(2,2,3,3,3-pentafluoropropoxy)-2-pyridylazo]-10-phenanthrol

A reaction flask was loaded with acetic acid (12 ml) and 9,10-phenanthrenequinone (0.77g) and the temperature was raised to 100 °C with stirring to dissolve 9,10-phenanthrenequinone. To the resultant, 2-hydrazino-6-(2,2,3,3,3-pentafluoropropoxy)pyridine (1.0g) obtained in (2) was added in 15 minutes. After stirring at 95 to 100 °C for one hour, the heating was stopped. Thereafter, the reaction product was left to cool and then filtrated to give crystals. After being successively washed with hot water and hot methanol, the crystals were dried to give an intended product (0.51g).

Production of Azo compound-10: 9-[6-(4-trifluoromethylphenoxy)-2-pyridylazo]-10-phenanthrol

(1) Production of 2-fluoro-6-(4-trifluoromethyl-phenoxy)pyridine

A reaction flask equipped with a cooling tube and a stirrer was loaded with 4-trifluoromethylphenol (8.4g), anhydrous potassium carbonate (8.6g), and dimethylformamide (15 ml), followed by stirring at room temperature for 15 minutes. To this mixture was dropwise added 2,6-difluoropyridine (6.0g) dissolved in dimethylformamide (15 ml) in one hour. Thereafter, the temperature was raised to 60 °C, and the mixture was stirred for six hours for reaction.

Water was added to the reaction mixture, and extraction was carried out with hexane, followed by adding magnesium sulfate to the extracted liquid for drying. After filtration to remove magnesium sulfate, hexane was removed by an evaporator to give an intended product (7.8g).

(2) Production of 2-hydrazino-6-(4-trifluoromethylphenoxy)pyridine

A reaction flask was loaded with 2-fluoro-6-(4-trifluoromethylphenoxy)pyridine (4.0g) obtained in (1) and ethanol (30 ml), and the mixture was heated up to 40 °C with stirring. To this, hydrazine monohydrate (3.8g) was dropwise added in 30 minutes. The temperature of the mixture was raised to the reflux temperature, followed by stirring for 20 hours. Thereafter, the heating was stopped, and the reaction mixture was cooled, followed by filtration to remove insoluble components. Then, the filtrate was condensed by an evaporator to give an intended product (2.0g).

(3) Production of 9-[6-(4-trifluoromethylphenoxy)-2-pyridylazo]-10-phenanthrol

A reaction flask was loaded with acetic acid (15 ml) and 9,10-phenanthrenequinone (1 .0g) and the temperature was raised to 95 °C with stirring to dissolve 9,10-phenanthrenequinone. To the resultant, 2-hydrazino-6-(4-trifluoromethylphenoxy)pyridine (1.5g) obtained in (2) was added in 15 minutes. After stirring at 95 to 100 °C for two hours, the reaction mixture was filtrated. After being successively washed with hot water and hot methanol, the resultant crystals were recrystallized with dioxane-water to give crystals, which were then filtrated and dried to give an intended product (0.5g).

Production of Azo compound-11: 9-(3,6-dimethylpyrazinylazo)-10-phenanthrol

(1) Production of 2-hydrazino-3,6-dimethylpyrazine

A reaction flask equipped with a cooling tube and a stirrer was loaded with 2-chloro-3,6-dimethylpyrazine (10g) and ethanol (15ml), followed by heating up to 50 °C with stirring. To the resultant, a mixture of hydrazine monohydrate (11.2g) and ethanol (10 ml) was dropwise added in one hour. The temperature was raised to the reflux temperature, followed by stirring for six hours. The heating was stopped and the reaction mixture was condensed by an evaporator. The precipitated crystals were filtrated and dried to give an intended product (2.7g).

(2) Production of 9-(3,6-dimethyl-pyrazinylazo)-10-phenanthrol

A reaction flask equipped with a cooling tube and a stirrer was loaded with acetic acid (80 ml) and 9,10-phenanthrenequinone (4.0g) and the temperature was raised to 90 °C with stirring to dissolve 9,10-phenanthrenequinone. To the resultant, 2-hydrazino-3,6-dimethylpyrazine (2.7g) obtained in (1) was added in 20 minutes. After stirring at 90 to 100 °C for two hours, the reaction mixture was cooled and filtrated. An aqueous solution of sodium hydroxide was added to the filtrate with stirring so that crystals separated out. After being washed with methanol, the filtrated crystals were recrystallized with dioxane-water to give crystals, which were then filtrated and dried to give an intended product (3.3g).

Production of Azo compound-12: 6-bromo-1-(3-methyl-2-pyridylazo)-2-naphthol

A reaction flask was loaded with 2-amino-3-methylpyridine (4.0g), ethanol (15 ml), and sodium ethoxide (2.5g), followed by dropwise addition of isopentyl nitrite (6 ml) to the flask in 30 minutes with stirring.

The resultant mixture was heated and stirred at 75 to 80 °C for four hours. Thereafter, the heating was stopped, and the reaction mixture was cooled to room temperature, followed by dropwise addition of 6-bromo-2-naphthol (5.0g) dissolved in ethanol (5 ml) in one hour to the mixture.

The resultant mixture was stirred at room temperature for one hour, heated, and stirred at 75 to 80 °C for additional one hour, followed by stopping the heating and then leaving the mixture to stand overnight. The reaction mixture was filtrated to remove insoluble components, and the filtrate was condensed by an evaporator for solidification. The resultant was dissolved in ethyl acetate (100 ml) and, after being successively washed with an aqueous solution of sodium hydroxide and water, the ethyl acetate layer was condensed by an evaporator, followed by addition of methanol to the residue for crystallization. The resultant was filtrated and the crystals were dried to give intended red orange crystals (1.7g).

Production of Azo compound-13: 6-bromo-1-(2-thiazolylazo)-2-naphthol

A reaction flask was loaded with 2-aminothiazole (3.0g) and a 62% aqueous solution of sulfuric acid (24g), and the reaction flask was cooled to 0 °C while dissolving 2-aminothiazole and stirring. To the resultant, a 45% sulfuric acid solution of nitrosyl sulfuric acid (8.5g) was dropwise added at 0 to 5 °C in one hour. After the dropwise addition was ended, the mixture was stirred at that temperature for 30 minutes.

The resultant liquid was dropwise added to a mixed solution of 6-bromo-2-naphthol (6.7g) and a 16% aqueous solution of sodium hydroxide (200 ml) at 0 to 10 °C in three hours. After the dropwise addition was ended, the mixture was stirred at 10 to 20 °C for one hour. The reaction mixture was neutralized with dilute sulfuric acid and filtrated to yield crystals, which were washed with water and then dried to give intended red purple crystals (7.7g).

Production of Azo compound-14: 9-(2-pyridylazo)-10-phenanthrol

A reaction flask equipped with a cooling tube and a stirrer was loaded with acetic acid (110 ml) and heated up to 90 °C with stirring. Into the reaction flask, 9,10-phenanthrenequinone (5.0g) was introduced and dissolved, followed by addition of 2-hydrazinopyridine (2.7g) in 10 minutes to the mixture. After stirring at 90 °C for 1.5 hours, the mixture was left to cool. The crystals obtained by filtration were successively washed with hot water and hot methanol, followed by recrystallization with dioxane-water. The resultant crystals were filtrated and dried to give an intended product (3.0g).

Production of Azo compound-15: 1 -(3-methyl-2-pyridylazo)-2-naphthol

A reaction flask equipped with a cooling tube and a stirrer was loaded with 2-amino-3-methylpyridine (5g), ethanol (25 ml), and sodium ethoxide (0.94g), followed by dropwise addition of isopentyl nitrite (5.4g) to the flask in 30 minutes with stirring. The resultant mixture was heated and stirred at 75 to 80 °C for four hours. Thereafter, the heating was stopped, and the reaction mixture was cooled to room temperature, followed by dropwise addition of 2-naphthol (3.3g) dissolved in ethanol (10 ml) in 30 minutes to the mixtures. The resultant mixture was stirred at room temperature for one hour, heated, and stirred at 75 to 80 °C for additional three hours, followed by stopping the heating and then leaving the mixture to stand overnight. The reaction mixture was filtrated to remove insoluble components, and the filtrate was condensed by an evaporator for solidification. The resultant solid was dissolved in ethyl acetate (100 ml) and, after being successively washed with an aqueous solution of sodium hydroxide and water, the ethyl acetate layer was condensed by an evaporator, followed by addition of methanol to the residue for crystallization. The resultant was filtrated for collection and the crystals were dried to give red orange crystals (0.4g).

Production of complex of azo compound and metal

Production of Complex-1: zinc, bis[1-(4-methyl-2-pyridylazo)-2-naphtholato]

A reaction flask equipped with a cooling tube and a stirrer was loaded with Azo compound-1 (1.1g), zinc acetate dihydrate (0.45g), and methanol (25 ml), followed by stirring at 55 to 60 °C for three hours. The heating was stopped, and the mixture was cooled to room temperature. After dropwise addition of water (10 ml) to the mixture, the mixture was filtrated to give red purple crude crystals, which were then put into methanol (20 ml). The mixture was stirred for two hours with heating, and then cooled, filtrated, and dried successively to give purified crystals (1.0g).

Production of Complex-2: copper, bis[1 -(2-pyridylazo)-2-naphtholato]

A reaction flask was loaded with Azo compound-2 (1.0g), copper acetate (0.37g), and methanol (25 ml), followed by stirring at 55 to 60 °C for three hours. The heating was stopped, and the mixture was cooled to room temperature. After dropwise addition of water (10 ml) to the mixture, the mixture was filtrated to give red purple crystals, which were then put into methanol (20 ml). The mixture was stirred for two hours with heating, and then cooled, filtrated, and dried successively to give purified crystals (0.8g).

Production of Complex-3: nickel, bis[3-(2-pentyloxy)-6-(2-pyridylazo)phenolato]

A reaction flask was loaded with 4-(2-pyridylazo)resorcinol (2.2g), methanol (60 ml), and nickel acetate tetrahydrate (1.2g), followed by stirring at 55 to 60°C for five hours. The heating was stopped and water (20 ml) was dropwise added to the mixture. The precipitate was filtrated for collection and then dried to give red purple crystals of nickel, bis[3-hydroxy-6-(2-pyridylazo)phenolato] (2.3g).

Subsequently, a reaction flask was loaded with the crystals of this metal complex (1.1g), dimethylformamide (5 ml), and anhydrous potassium carbonate (0.93g). The temperature was raised to 70 °C with stirring, and 2-bromopentane (0.85g) was dropwise added in one hour to the mixture, followed by stirring at 70 to 80 °C for five hours. The heating was stopped and, after cooling, the reaction mixture was poured into water (200 ml). The precipitate was filtrated for collection and dried to give red purple crystals. The resultant crystals were recrystallized with a mixed solvent of hexane-methanol to give purified crystals (0.86g).

Production of Complex-4: zinc, bis[1-(3-chloro-5-(trifluoromethyl)-2-pyridylazo)-2-naphtholato]

A reaction flask was loaded with Azo compound-3 (1.8g), zinc acetate dihydrate (0.55g), and methanol (20 ml), followed by stirring at 55 to 60 °C for five hours. The heating was stopped, and the mixture was cooled to room temperature. After dropwise addition of, water (10 ml) to the mixture, the mixture was filtrated to give red purple crystals, which were then put into warm water (30 ml). Then, stirring, filtration, and drying were successively carried out to obtain purified crystals (1.7g).

Production of Complex-5: zinc, bis[1-(5-chloro-2-pyridylazo)-2-naphtholato]

A reaction flask was loaded with Azo compound-4 (1.5g), zinc acetate dihydrate (0.55g), and methanol (40 ml), followed by stirring at 55 to 60 °C for five hours. The heating was stopped, and the mixture was cooled to room temperature. After dropwise addition of water (10 ml) to the mixture, the mixture was filtrated to give red purple crude crystals, which were then put into warm water (30 ml). Then, stirring, filtration, and drying were successively carried out to obtain purified crystals (1.3g).

Production of Complex-6: zinc, bis[1-(2-thiazolylazo)-2-naphtholato]

A reaction flask equipped with a cooling tube and a stirrer was loaded with Azo compound-5 (0.51g), zinc acetate dihydrate (0.22g), and methanol (20 ml), followed by stirring at 50 to 60 °C for five hours. The heating was stopped, and the mixture was cooled, followed by filtration. The resultant black purple crystals were put into methanol (30 ml) so that the crystals was dispersed, followed by filtration. The resultant crystals were put into warm water (30 ml) so that the crystals was dispersed in the warm water. Then, filtration and drying were successively carried out to obtain purified crystals (0.51g).

Production of Complex-7: zinc, bis[1-(2-pyridylazo)-2-naphtholato]

A reaction flask was loaded with Azo compound-2 (1.1g), zinc acetate dihydrate (0.48g), and methanol (25 ml), followed by stirring at 55 to 60 °C for three hours. The heating was stopped, and the mixture was cooled to room temperature. After dropwise addition of water (10 ml) to the mixture, filtration was carried out to obtain red purple crude crystals, which were then put into hot water (100 ml). The mixture was stirred for one hour with heating, and then filtrated and dried successively to give purified crystals (1.0g).

Production of Complex-8: zinc, bis[1-(3-methyl-2-pyridylazo)-2-naphtholato]

A reaction flask was loaded with Azo compound-15 (0.4g), zinc acetate dihydrate (0.17g), and methanol (15 ml), followed by stirring at 55 to 60 °C for three hours. The heating was stopped, and the mixture was cooled to room

temperature. After dropwise addition of water (10 ml) to the mixture, filtration was carried out to obtain red purple crude crystals, which were then put into hot water (50 ml). The mixture was stirred for one hour with heating, and then filtrated and dried successively to give purified crystals (0.4g).

Production of Complex-9: nickel, bis[1-(4-methyl-2-pyridylazo)-2-naphtholato]

A reaction flask was loaded with Azo compound-1 (0.55g), nickel acetate tetrahydrate (0.25g), and methanol (15 ml), followed by stirring at 55 to 60 °C for three hours. The heating was stopped, and the mixture was cooled to room temperature. After dropwise addition of 5 ml of water to the mixture, filtration was carried out to give red purple crude crystals. The crystals were stirred for two hours in methanol (20 ml) with heating, and then cooled, filtrated, and dried successively to give purified crystals (0.45g).

Production of Complex-10: copper, bis[1-(4-methyl-2-pyridylazo) -2-naphtholato]

A reaction flask was loaded with Azo compound-1 (0.55g), copper(II) acetate (0.18g), and methanol (15 ml), followed by stirring at 55 to 60 °C for three hours. The heating was stopped, and the mixture was cooled to room temperature. After dropwise addition of water (5 ml) to the mixture, filtration was carried out to obtain red purple crude crystals. The crystals were stirred for two hours in methanol (20 ml) with heating, and then cooled, filtrated, and dried successively to give purified crystals (0.41g).

Production of Complex-11: zinc, bis[9-(2-pyridylazo)-10-phenanthrolato]

A reaction flask was loaded with Azo compound-14 (1.0g), zinc acetate dihydrate (0.37g), and methanol (20 ml), followed by stirring at 55 to 60 °C for three hours. The heating was stopped, and the reaction product was filtrated to give red purple crude crystals. The crystals were successively washed with hot methanol, hot dioxane, and hot water, followed by drying to give purified crystals (0.8g).

Production of Complex-12: zinc, bis[1-(6-methyl-2-pyridylazo)-2-naphtholato]

A reaction flask was loaded with Azo compound-6 (0.40g), zinc acetate dihydrate (0.17g), and methanol (15 ml), followed by stirring at 55 to 60 °C for three hours. The heating was stopped and, after cooling to room temperature, filtration was carried out to obtain black purple crude crystals, which were then put into hot water (50 ml). The mixture was stirred for one hour with heating, and then filtration and drying were successively carried out to obtain purified crystals (0.36g).

Production of Complex-13: nickel, bis[1-(6-methyl-2-pyridylazo)-2-naphtholato]

A reaction flask was loaded with Azo compound-6 (0.40g), nickel acetate tetrahydrate (0.19g), and methanol (15 ml), followed by stirring at 55 to 60 °C for three hours. The heating was stopped and, after cooling to room temperature, filtration was carried out to obtain black purple crude crystals, which were then put into hot water (50 ml). The mixture was stirred for one hour with heating, and then filtrated and dried successively to give purified crystals (0.34g).

Production of Complex-14: copper, bis[1-(6-methyl-2-pyridylazo)-2-naphtholato]

A reaction flask was loaded with Azo compound-6 (0.40g), copper (II) acetate (0.14g), and methanol (15 ml), followed by stirring at 55 to 60 °C for three hours. The heating was stopped and, after cooling to room temperature, filtration was carried out to obtain black purple crude crystals, which were then put into hot water (50 ml). The mixture was stirred for one hour with heating, and then filtrated and dried successively to give purified crystals (0.33g).

Production of Complex-15: manganese (II), bis[1-(6-methyl-2-pyridylazo)-2-naphtholato]

A reaction flask was loaded with Azo compound-6 (0.40g), manganese (II) acetate tetrahydrate (0.18g), and methanol (15 ml), followed by stirring at 55 to 60 °C for three hours. The heating was stopped and, after cooling to room temperature, filtration was carried out to obtain black purple crude crystals, which were then put into hot water (50 ml). The mixture was stirred for 0.5 hour with heating, and then filtrated and dried successively to give purified crystals (0.38g).

Production of Complex-16: zinc, bis[1-(4,6-dimethyl-2-pyridylazo)-2-naphtholato]

A reaction flask was loaded with Azo compound-7 (0.20g), zinc acetate dihydrate (0.08g), and methanol (10 ml), followed by stirring at 55 to 60 °C for three hours. The heating was stopped and, after cooling to room temperature, filtration was carried out to obtain red purple crude crystals, which were then put into hot water (50 ml). The mixture was stirred for one hour with heating, and then filtrated and dried successively to give purified crystals (0.17g).

Production of Complex-17: zinc, bis[1-(3-chloro-4,6-dimethyl-2-pyrimidinylazo)-2-naphtholato]

A reaction flask was loaded with Azo compound-8 (0.45g), zinc acetate dihydrate (0.17g), and methanol (10 ml), followed by stirring at 55 to 60 °C for five hours. The heating was stopped and, after cooling to room temperature, filtration was carried out to obtain black purple crude crystals, which were then put into hot water (50 ml). The mixture was stirred for one hour with heating, and then filtrated and dried successively to give purified crystals (0.44g).

Production of Complex-18: nickel, bis[9-(6-(2,2,3,3,3-pentafluoropropoxy)-2-pyridylazo)-10-phenanthrolato]

A reaction flask was loaded with Azo compound-9 (0.48g) and methanol (13 ml) and, while stirring and heating the mixture, further loaded with nickel acetate tetrahydrate (0.13g). After stirring at 55 to 60 °C for five hours, the heating was stopped. Then, the reaction product was left to cool and filtrated to give crude crystals. The crystals were successively washed with hot water, methanol, dioxane, and 1-propanol, and then dried to give purified crystals (0.32g).

Production of Complex-19: zinc, bis[9-(6-(4-trifluoromethylphenoxy)-2-pyridylazo)-10-phenanthrolato]

A reaction flask was loaded with Azo compound-10 (0.30g) and methanol (6 ml) and, while stirring and heating the mixture, further loaded with zinc acetate dihydrate (0.07g). After stirring at 55 to 60 °C for two hours, the heating was stopped. Then, the reaction product was left to cool and filtrated to give crude crystals. The crystals were successively washed with hot water and hot methanol, and then dried to give purified crystals (0.29g).

Production of Complex-20: zinc, bis(9-(3,6-dimethylpyrazinylazo)-10-phenanthrolato]

A reaction flask was loaded with Azo compound-11 (0.60g), zinc acetate dihydrate (0.22g), and methanol (10 ml), followed by stirring at 55 to 60 °C for three hours. The heating was stopped and the reaction product was filtrated to give crude crystals, which were then successively washed with hot water and hot methanol, and further recrystallized with dioxane-water. The resultant crystals were filtrated and then dried to give purified crystals (0.57g).

Production of Complex-21: copper, bis[6-bromo-1-(3-methyl-2-pyridylazo)-2-naphtholato]

A reaction flask was loaded with Azo compound-12 (1.7g), copper acetate (0.45g), and methanol (20 ml), followed by stirring at 55 to 60 °C for three hours. The heating was stopped, and the mixture was cooled to room temperature. After dropwise addition of water (10 ml) to the mixture, the mixture was filtrated to give red purple crude crystals, which were then put into warm water (30 ml). Then, stirring, filtration, and drying were successively carried out to obtain purified crystals (1.4g).

Production of Complex-22: zinc, bis[6-bromo-1-(2-thiazolylazo)-2-naphtholato]

A reaction flask was loaded with Azo compound-13 (1.9g), zinc acetate dihydrate (0.61g), and methanol (60 ml), followed by stirring at 50 to 60 °C for four hours. The heating was stopped and the mixture was cooled. After addition of water (40 ml) to the mixture, filtration was carried out to obtain crystals, which were then put into a mixed solvent of hexane-methanol so that the crystals was dispersed in the solvent. After the resultant was heated, cooling, filtration, and drying were successively carried out to obtain purified purple crystals (1.1g).

Production of Complex-23: nickel, bis[1-(2-pyridylazo)-2-naphtholato]

A reaction flask equipped with a cooler and a stirrer was loaded with Azo compound-2 (1.1g), nickel acetate tetrahydrate (0.55g), and methanol (25 ml), followed by stirring at 55 to 60 °C for three hours. The heating was stopped, and the mixture was cooled to room temperature. After dropwise addition of water (10 ml) to the mixture, the mixture was filtrated to give red purple crude crystals, which were then put into methanol (20 ml). The resultant was stirred for two hours with heating, and then cooled, filtrated, and dried successively to give purified crystals (1.0g).

The structural formulae and the weight-loss starting temperatures or the decomposition temperatures of the above-described Complex-1 to Complex-23 are shown together in Table 1.

In Table 1, the weight-loss starting temperatures and decomposition temperatures were measured by the following methods.

Weight-loss starting temperature:

With the use of a thermogravimeter (TGA-50 manufactured by Shimadzu Corporation), the weight-loss starting temperature was determined by measuring the temperature at which a weight loss of a sample started when the sample was heated in a nitrogen ($N_2$) atmosphere at a temperature raising rate of 10 °C/min.

Decomposition temperature:

With the use of a differential scanning calorimeter (DSC-50 manufactured by Shimadzu Corporation), the decomposition temperature was determined by measuring the temperature at which a dyestuff began to be chemically decomposed (i.e. the temperature at which the heat generation peak appeared) when the sample was heated in nitrogen ($N_2$) of 1 atm at a temperature raising rate of 10 °C/min.

Here, although not shown in Table 1, the sublimation or evaporation rates of Complexes-1, 2, 3, 4, 5, 6, and 23 as measured by the aforementioned method with the use of a film thickness monitor of quartz oscillator type (CRTM-5000) manufactured by ULVAC JAPAN, Ltd., were 900, 3400, 1000, 1500, 1700, 2300, and 150 (unit: Å/min for each), respectively.

## Table 1

| Complex No. | The Name of Complex | Structural Formula | Weight-Loss Starting Temperature (°C) | Decomposition Temperature (°C) |
|---|---|---|---|---|
| 1 | Zinc, bis[1-(4-methyl-2-pyridylazo)-2-naphtholato] | 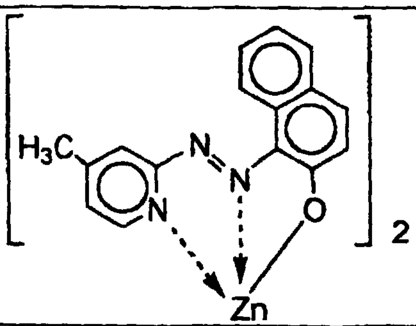 | 380 | - |
| 2 | Copper, bis[1-(2-pyridylazo)-2-naphtholato] | 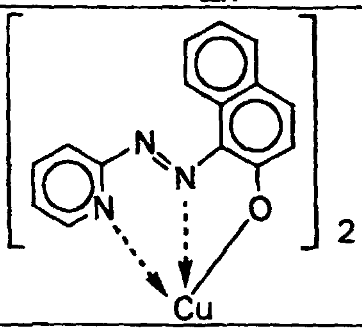 | 330 | - |

| | | | | |
|---|---|---|---|---|
| 3 | Nickel, bis[3-(2-pentyloxy)-6-(2-pyridyl-azo)phenolato] | 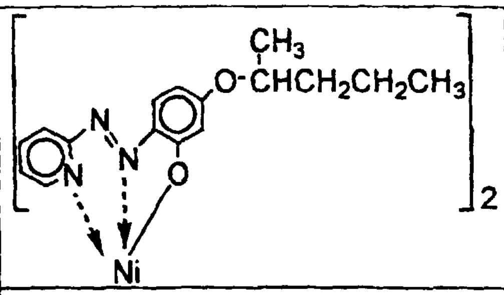 | 310 | - |
| 4 | Zinc, bis[1-(3-chloro-5-(trifluoromethyl)-2-pyridylazo)-2-naphtholato] | 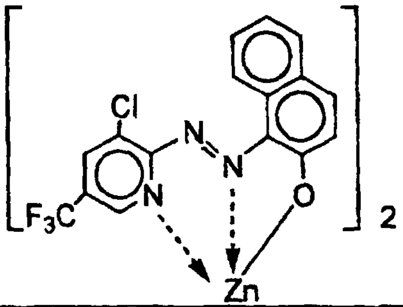 | 390 | - |
| 5 | Zinc, bis[1-(5-chloro-2-pyridylazo)-2-naphtholato] | 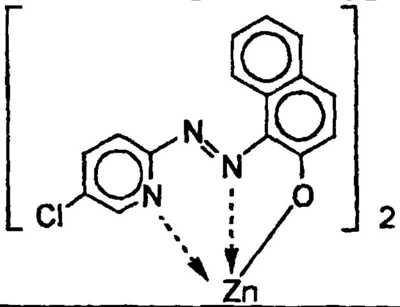 | 400 | - |
| 6 | Zinc, bis[1-(2-thiazolylazo)-2-naphtholato] | 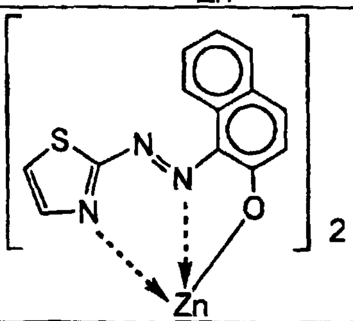 | 330 | - |
| 7 | Zinc, bis[1-(2-pyridylazo)-2-naphtholato] | 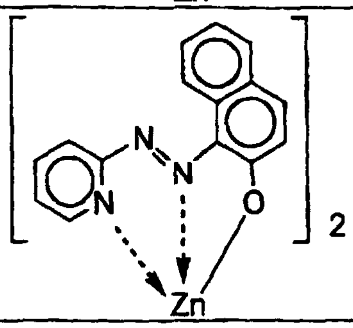 | - | 380 |

| | | | | |
|---|---|---|---|---|
| 8 | Zinc, bis[1-(3-methyl-2-pyridylazo)-2-naphtholato] | 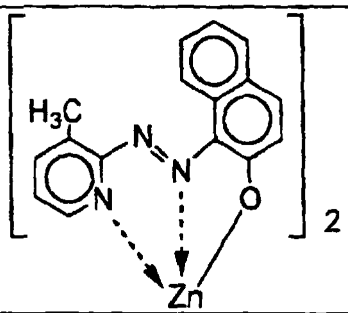 | - | 360 |
| 9 | Nickel, bis[1-(4-methyl-2-pyridylazo)-2-naphtholato] | 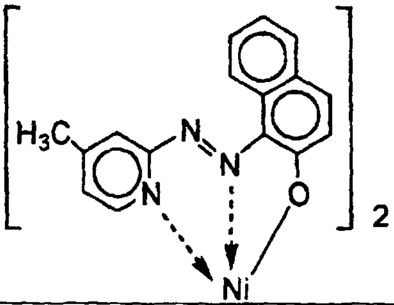 | - | 310 |
| 10 | Copper, bis[1-(4-methyl-2-pyridylazo)-2-naphtholato] | 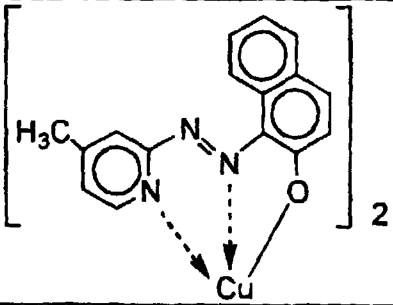 | - | 310 |
| 11 | Zinc, bis[9-(2-pyridylazo)-10-phenanthrolato] | 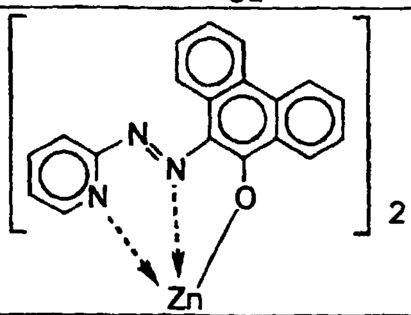 | - | 390 |
| 12 | Zinc, bis[1-(6-methyl-2-pyridylazo)-2-naphtholato] | 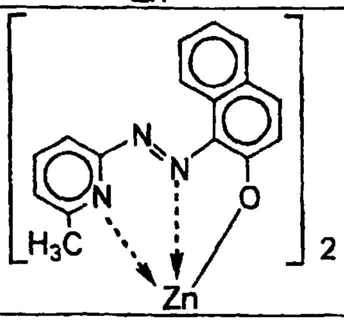 | - | 360 |

| | | | | |
|---|---|---|---|---|
| 13 | Nickel, bis[1-(6-methyl-2-pyridylazo)-2-naphtholato] | 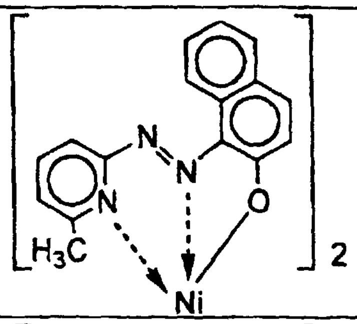 | - | 360 |
| 14 | Copper, bis[1-(6-methyl-2-pyridylazo)-2-naphtholato] | 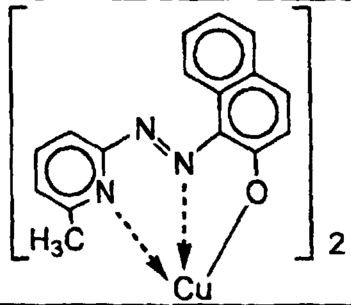 | - | 360 |
| 15 | Manganese(II), bis[1-(6-methyl-2-pyridylazo)-2-naphtholato] | 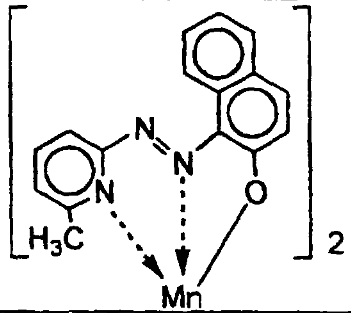 | - | 360 |
| 16 | Zinc, bis[1-(4,6-dimethyl-2-pyridylazo)-2-naphtholato] | 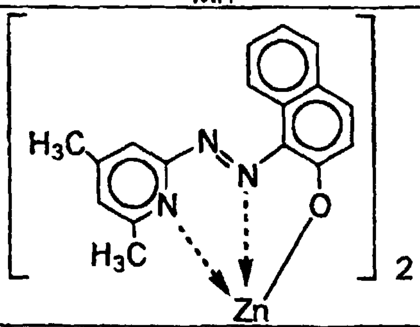 | - | 350 |
| 17 | Zinc, bis[1-(3-chloro-4,6-dimethyl-2-pyrimidinylazo)-2-naphtholato] | 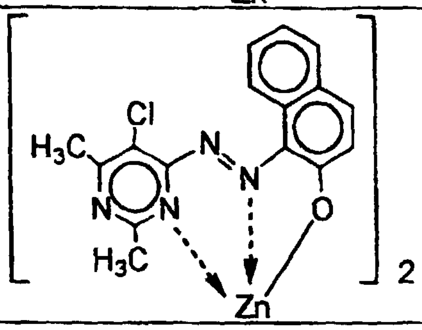 | - | 400 |

| | | | | |
|---|---|---|---|---|
| 18 | Nickel, bis[9-(6-(2,2,3,3,3-pentafluoropropoxy)-2-pyridylazo)-10-phenanthrolato] | 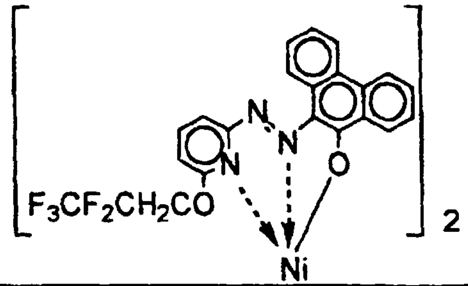 | - | 370 |
| 19 | Zinc, bis[9-(6-(4-trifluoro-methyl-phenoxy)-2-pyridylazo)-10-phenanthrolato] | 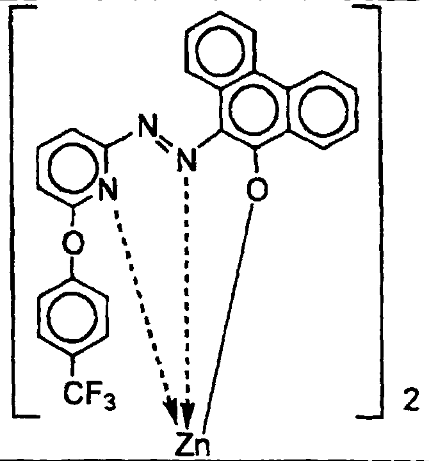 | - | 390 |
| 20 | Zinc, bis[9-(3,6-dimethyl-pyrazinylazo)-10-phenanthrolato] | 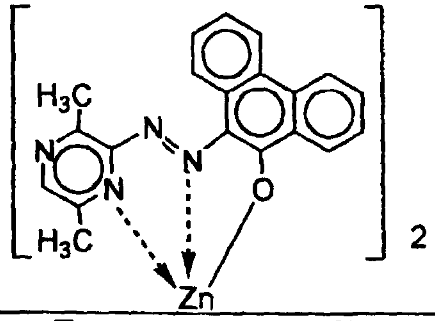 | - | 360 |
| 21 | Copper, bis[6-bromo-1-(3-methyl-2-pyridylazo)-2-naphtholato] | 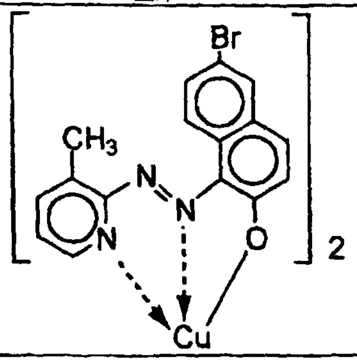 | 270 | - |

| | | | | |
|---|---|---|---|---|
| 22 | Zinc, bis[6-bromo-1-(2-thiazolylazo)-2-naphtholato] | 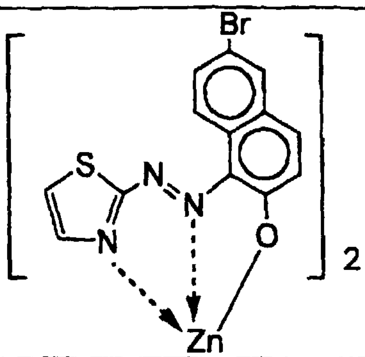 | 250 | - |
| 23 | Nickel, bis[1-(2-pyridylazo)-2-naphtholato] | 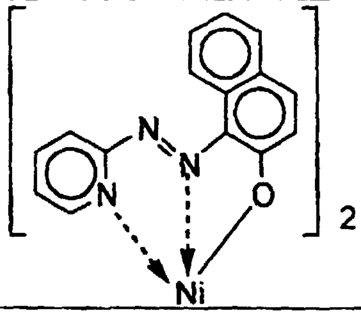 | 400 | - |

Production of optical recording medium

Optical recording medium-1:

A recording layer (2) was formed to a thickness of 210 nm by vacuum-depositing Complex-1 on a substrate (1) on which a spiral groove was formed with a track pitch of 0.74 μm, a groove width of 0.27 μm, and a groove depth of 51 nm. The substrate (1) was a plate of polycarbonate resin having a refractive index (n) of 1.55, a diameter of 120 mm, and a thickness of 0.6 mm.

Then, a reflective layer (3) was formed to a thickness of 100 nm on the recording layer (2) by sputtering gold. Further, an adhesive layer (4) made of an ultraviolet-curable acrylic resin and a substrate (5) made of the same material and having the same thickness as the substrate (1) were laminated in this order on the recording layer (2) to produce an optical recording medium of a disk-type.

Optical recording medium-2 to Optical recording medium- 23:

Optical recording medium-2 to Optical recording medium-23 were produced by a method similar to that employed for the production of Optical recording medium-1. The material and the dimension of the substrate used in producing each of the optical recording media are the same as those used for the production of Optical recording medium-1. The width and the depth of the groove disposed in the substrate, the groove width/TP, the groove depth * (4n)/λ, the kind of the complex, and the thickness of the recording layer are as shown in Table 3.

However, Complex-21 and Complex-22 could not be vapor-deposited on the substrate because of the decomposition by heat, thereby the optical recording medium failed to be produced.

In the production process of each of Optical recording media-1 to 23, the pressure at which vapor deposition was carried out was set to at about $10^{-4}$ Torr, and the temperature at which the complex was heated was set at about 200 to 350 °C so that it was lower by 50 to 100 °C than the weight-loss starting temperature or the decomposition temperature of each complex and the film forming rate was about 1000 Å/min.

Optical recording medium-24:

A 4-wt% solution of a cyanine dyestuff having a decomposition temperature of 280 °C (NK79 manufactured

by Nippon Kankoh-Shikiso Kenkyusho Co., Ltd.) was prepared by dissolving it into fluoroalcohol (Fluoroalcohol (N1)™ manufactured by Daikin Industries, Ltd.), and the solution was applied on the substrate by the spin coater method (at a rotating speed of 5000 rpm) to form a recording layer. The material of the substrate, the thickness of the recording layer, and the like are as shown in Table 2.

Table 2

| Optical Recording Medium No. | Substrate | | | | Complex No. | Recording Layer Thickness (nm) |
|---|---|---|---|---|---|---|
| | Groove Width (μm) | Groove Depth (nm) | Groove Width /TP | Groove Depth *4n/λ | | |
| 1 | 0.27 | 51 | 0.36 | 0.49 | 1 | 210 |
| 2 | 0.27 | 51 | 0.36 | 0.49 | 2 | 120 |
| 3 | 0.27 | 51 | 0.36 | 0.49 | 3 | 140 |
| 4 | 0.27 | 51 | 0.36 | 0.49 | 4 | 120 |
| 5 | 0.29 | 60 | 0.39 | 0.58 | 5 | 130 |
| 6 | 0.25 | 38 | 0.34 | 0.37 | 6 | 90 |
| 7 | 0.27 | 51 | 0.36 | 0.49 | 7 | 140 |
| 8 | 0.27 | 51 | 0.36 | 0.49 | 8 | 120 |
| 9 | 0.27 | 51 | 0.36 | 0.49 | 9 | 120 |
| 10 | 0.27 | 51 | 0.36 | 0.49 | 10 | 120 |
| 11 | 0.27 | 51 | 0.36 | 0.49 | 11 | 200 |
| 12 | 0.27 | 51 | 0.36 | 0.49 | 12 | 130 |
| 13 | 0.27 | 51 | 0.36 | 0.49 | 13 | 120 |
| 14 | 0.27 | 51 | 0.36 | 0.49 | 14 | 120 |
| 15 | 0.27 | 51 | 0.36 | 0.49 | 15 | 150 |
| 16 | 0.29 | 60 | 0.39 | 0.58 | 16 | 95 |
| 17 | 0.25 | 38 | 0.34 | 0.37 | 17 | 210 |
| 18 | 0.27 | 51 | 0.36 | 0.49 | 18 | 150 |
| 19 | 0.27 | 51 | 0.36 | 0.49 | 19 | 140 |
| 20 | 0.27 | 51 | 0.36 | 0.49 | 20 | 100 |
| 21 | 0.27 | 51 | 0.36 | 0.49 | 21 | - |
| 22 | 0.27 | 51 | 0.36 | 0.49 | 22 | - |
| 23 | 0.27 | 51 | 0.36 | 0.49 | 23 | 90 |
| 24 | 027 | 115 | 0.36 | 1.11 | Cyanine dyestuff | 110 |

The following tests were conducted on Optical recording medium-1 to Optical recording medium-24 for evaluation of their performances.

(1) Tracking error signal

With the use of an optical disk evaluation apparatus (DDU-1000, laser wavelength: 640 nm) manufactured by Pulsetech Kogyo Co., Ltd., the tracking error signal of an unrecorded disk was evaluated. The tracking error signal was evaluated by the difference ( Δ TE) between the maximum value (TEmax) and the minimum value (TEmin) in the

radial direction and the average value thereof (TEave), of which unit each is mV.

(2) Continuous recording state

With the use of the above-mentioned evaluation apparatus, the recording state was observed upon recording random signals. The evaluation standard for the state of signal recordation was as follows:

3: showed an extremely excellent stability as to continuous recordation;
2: showed stability which permits practical use as to continuous recordation; and
1: was such unstable that practical use is not allowed as to continuous recordation because tracking ran off or a still state or the like appeared during the recordation.

(3) Resolution

It was measured with the use of the above-mentioned evaluation apparatus, and the resolution value at a central portion of the disk radius was determined as a representative value.
The results of the performance evaluation of each optical recording medium are shown in Table 3.
Further, the tracking error signals of Optical recording medium-12 (vapor deposition type) and Optical recording medium-24 (application type) along the radial direction of the disk are shown in Fig. 2 as relative values when the maximum value is set to be 1.

Table 3

| Optical Recording Medium No. | TEave | ΔTE | Continuous Recording State | Resolution |
|---|---|---|---|---|
| 1 | 210 | 20 | 2 | 0.24 |
| 2 | 170 | 20 | 2 | 0.26 |
| 3 | 190 | 20 | 2 | 0.29 |
| 4 | 200 | 20 | 2 | 0.24 |
| 5 | 200 | 20 | 2 | 0.22 |
| 6 | 160 | 20 | 2 | 0.27 |
| 7 | 170 | 14 | 2 | 0.25 |
| 8 | 190 | 15 | 2 | 0.25 |
| 9 | 150 | 12 | 2 | 0.33 |
| 10 | 180 | 14 | 2 | 0.26 |
| 11 | 190 | 16 | 2 | 0.19 |
| 12 | 180 | 15 | 3 | 0.23 |
| 13 | 200 | 16 | 3 | 0.31 |
| 14 | 170 | 14 | 3 | 0.24 |
| 15 | 160 | 14 | 3 | 0.22 |
| 16 | 150 | 12 | 3 | 0.26 |
| 17 | 150 | 12 | 3 | 0.25 |
| 18 | 150 | 12 | 3 | 0.24 |
| 19 | 180 | 14 | 3 | 0.25 |
| 20 | 150 | 12 | 3 | 0.25 |
| 21 | The recording layer could not be formed due to decomposition of the complex during vacuum vapor deposition. | | | |

Table 3 (continued)

| Optical Recording Medium No. | TEave | ΔTE | Continuous Recording State | Resolution |
|---|---|---|---|---|
| 22 | The recording layer could not be formed due to decomposition of the complex during vacuum vapor deposition. | | | |
| 23 | 130 | 20 | 1 | 0.16 |
| 24 | 110 | 60 | 1 | 0.16 |

Here, although not shown in the Table, Carrier to noise ratio (CN value) of each of Optical recording media-12 to 20 was measured. A CN value of not less than 50 dB was obtained in each optical recording medium, thus confirming a good recordation state.

From Table 3, each of the optical recording media (Optical recording media-1 to 20, 23) having the recording layer formed by vapor-depositing the metal-containing azo compound has a smaller ΔTE, i.e. a smaller change in the tracking error signal in the radial direction, than that of Optical recording medium-24 having the recording layer formed by the spin coater method. This shows that, by using the vapor deposition method, a proper tracking error signal can be ensured even if the substrate having a groove of a smaller depth is used.

Further, by vapor-depositing the metal-containing azo compound having the decomposition temperature within the range of 300 to 500 °C (Complexes-1 to 20) to form the recording layer, it is possible to obtain the optical recording medium that exhibits the good recording property with practical productivity. This is clear also from the fact that the complexes having a decomposition temperature out of the aforementioned range could not be vapor-deposited.

The weight-loss starting temperature of the complex used in the production of Optical recording medium-23 was 400 °C, thus being in the above-mentioned proper range. However, the tracking error signal and the resolution of Optical recording medium-23 were each lower than those of Optical recording media-1 to 22. This seems to be caused for the reason that since its evaporation rate was as small as 150 Å/min, the complex was decomposed by heating under a condition such that the film forming rate was 1000 Å/min.

Further, as shown in Optical recording media-12 to 20, by using the metal-containing azo compound having the substituent R at the specific position, it is possible to obtain an optical recording medium by which continuous recordation can be stably carried out. This seems to be because, when the substituent R is present at the specific position of the metal-containing azo compound, for some unknown reason or other, there will be substantially no influence from adjacent tracks, and therefore, no change in the tracking signal upon recording information into the disk.

INDUSTRIAL APPLICABILITY

In the optical recording medium of the present invention, its recording layer is formed by vapor-depositing the metal-containing azo compound having the specific weight-loss starting temperature or the specific decomposition temperature. Vapor-deposition of the metal-containing azo compound having the specific weight-loss starting temperature or the specific decomposition temperature makes it possible to efficiently produce the optical recording medium having the excellent quality with the uniform recording layer which follows the groove shape on the substrate, thereby giving a great practical value to the production of optical recording media.

Further, use of the metal-containing azo compound having the specific substituent makes it possible to obtain the optical recording medium by which continuous recordation can be stably carried out. Such an optical recording medium is extremely useful in the fields of acoustics, videos, and computers.

**Claims**

1. An optical recording medium having a recording layer formed on a substrate, the recording layer allowing writing and/or reading information by a laser beam, characterized in that the recording layer is formed on the substrate by vapor-depositing a recording layer-constituting material comprising at least one metal-containing azo compound having a weight-loss starting temperature or a decomposition temperature of from 300 to 500 °C.

2. The optical recording medium according to claim 1 characterized in that the metal-containing azo compound has a sublimation or evaporation rate of not less than 200 Å/min.

3. The optical recording medium according to claim 1 or 2 characterized in that the metal-containing azo compound is represented by the following general formula (a) or (a'):

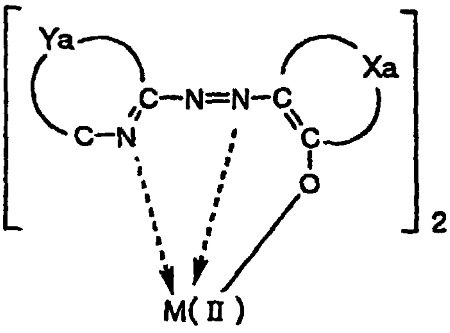

or

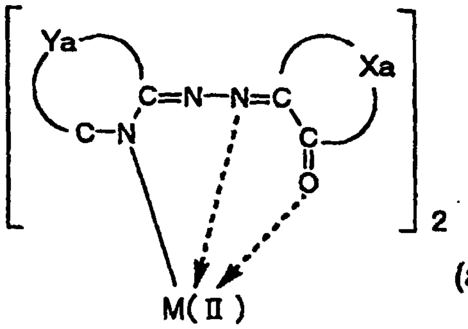

(a) (a')

wherein M(II) is a bivalent metal, Xa is a substituted or non-substituted residue that forms a monocyclic or polycyclic aromatic ring together with carbon atoms that are adjacent thereto at its both ends, Ya is a substituted or non-substituted residue that forms a nitrogen-containing aromatic heterocycle together with a nitrogen atom and carbon atoms that are adjacent thereto at its both ends, and the substituents when present in these residues are independently selected from the group consisting of halogen atoms, substituted and non-substituted alkyl groups, substituted and non-substituted alkoxy groups, substituted and non-substituted alkylthio groups, substituted and non-substituted aryl groups, substituted and non-substituted aryloxy groups, substituted and non-substituted arylthio groups, nitro group, and substituted and non-substituted amino groups.

**4.** The optical recording medium according to claim 3 in which, when the residue Xa and/or the residue Ya has a substituent(s), the carbon number of the substituent(s) is 1 to 9.

**5.** The optical recording medium according to claim 3 or 4 in which Xa forms a benzene ring, a phenanthrene ring, or a naphthalene ring with the adjacent carbon atoms.

**6.** The optical recording medium according to any one of claims 3 to 5 in which Ya forms a pyridyl group, a pyrimidinyl group, a pyrazinyl group, a triazinyl group, a thiazolyl group, a benzothiazolyl group with the nitrogen atom and the carbon atoms adjacent thereto.

**7.** The optical recording medium according to any one of claims 3 to 6 in which a sulfur atom is bonded instead of the oxygen atom bonded to the carbon atom that is adjacent to the residue Xa in the general formula (a) or (a').

**8.** The optical recording medium according to claim 1 or 2 characterized in that the metal-containing azo compound is represented by the following general formula (b) or (b'):

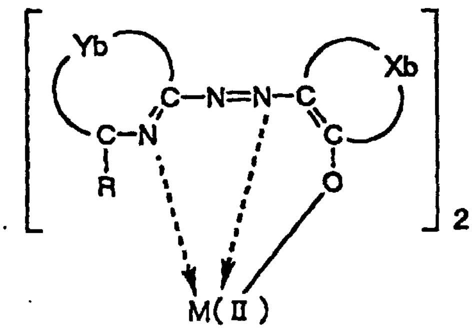

or

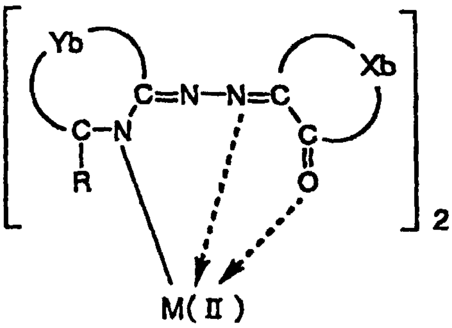

(b) (b')

wherein M(II) is a bivalent metal, R is selected from the group consisting of substituted and non-substituted alkyl groups, substituted and non-substituted alkoxy groups, substituted and non-substituted alkylthio groups, substituted and non-substituted aryl groups, substituted and non-substituted aryloxy groups, and substituted and non-substituted arylthio groups, Xb is a substituted or non-substituted residue that forms a monocyclic or polycyclic aromatic ring together with carbon atoms that are adjacent thereto at its both ends, Yb is a substituted or non-substituted residue that forms a nitrogen-containing aromatic heterocycle together with a nitrogen atom and carbon atoms that are adjacent thereto at its both ends, and the substituents when present in these residues are independently selected from the group consisting of halogen atoms, substituted and non-substituted alkyl groups, substituted and non-substituted alkoxy groups, substituted and non-substituted alkylthio groups, substituted and non-substituted aryl groups, substituted and non-substituted aryloxy groups, substituted and non-substituted arylthio groups, nitro group, and substituted and non-substituted amino groups.

**9.** The optical recording medium according to claim 8 in which R is a group of which the carbon number is 1 to 9.

**10.** The optical recording medium according to claim 8 or 9 in which R is selected from the group consisting of methyl, ethyl, butyl, phenyl, methoxy, ethoxy, butoxy, phenoxy, methylthio, ethylthio, butylthio, and phenylthio group; or any one of the these groups of which at least one hydrogen atom is substituted with a halogen atom.

**11.** The optical recording medium according to any one of claims 8 to 10 in which, when the residue Xb and/or the residue Yb has a substituent(s), the carbon number of the substituent(s) is 1 to 9.

**12.** The optical recording medium according to any one of claims 8 to 11 in which Xb forms a phenanthrene ring, or a naphthalene ring with the adjacent carbon atoms.

**13.** The optical recording medium according to any one of claims 8 to 12 in which Yb forms a pyridyl group, a pyrimidinyl group, a pyrazinyl group, triazinyl group, or a thiazolyl group with the nitrogen atom and the carbon atoms adjacent thereto.

**14.** The optical recording medium according to any one of claims 8 to 13 in which a sulfur atom is bonded instead of the oxygen atom bonded to the carbon atom that is adjacent to the residue Xb in the general formula (b) or (b').

**15.** The optical recording medium according to claim 1 or 2 characterized in that the metal-containing azo compound is represented by the following general formula (c):

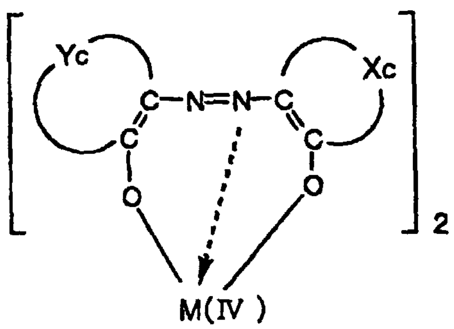

(c)

wherein M(IV) is a tetravalent metal, Xc and Yc each is a substituted or non-substituted residue that forms a monocyclic or polycyclic aromatic ring together with carbon atoms that are adjacent thereto at its both ends, and the substituents when present in these residues are independently selected from the group consisting of halogen atoms, substituted and non-substituted alkyl groups, substituted and non-substituted alkoxy groups, substituted and non-substituted alkylthio groups, substituted and non-substituted aryl groups, substituted and non-substituted aryloxy groups, substituted and non-substituted arylthio groups, nitro group, and substituted and non-substituted amino groups.

**16.** The optical recording medium according to claim 1 or 2 characterized in that the metal-containing azo compound is represented by the following general formula (d) or (d'):

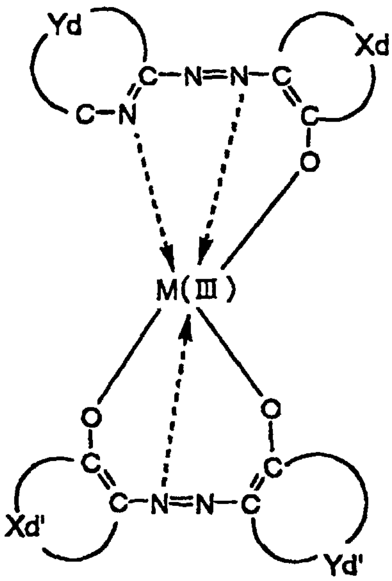

or

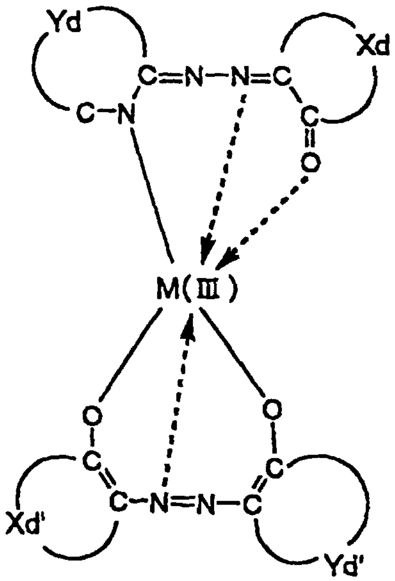

(d) (d')

wherein M(III) is a trivalent metal, Xd, Xd', and Yd' each is a substituted or non-substituted residue that forms a monocyclic or polycyclic aromatic ring together with carbon atoms that are adjacent thereto at its both ends, Yd is a substituted or non-substituted residue that forms a nitrogen-containing aromatic heterocycle together with a nitrogen atom and carbon atoms that are adjacent thereto at its both ends, and the substituents when present in these residues are independently selected from the group consisting of halogen atoms, substituted and non-substituted alkyl groups, substituted and non-substituted alkoxy groups, substituted and non-substituted alkylthio groups, substituted and non-substituted aryl groups, substituted and non-substituted aryloxy groups, substituted and non-substituted arylthio groups, nitro group, and substituted and non-substituted amino groups.

**17.** The optical recording medium according to any one of claims 1 to 16 in which the recording layer has a thickness of 40 to 300 nm.

**18.** The optical recording medium according to any one of claims 1 to 17 in which the reflective layer has a thickness of 30 to 200 nm.

**19.** The optical recording medium according to any one of claims 1 to 18 in which the substrate has a spiral groove with the groove width (μm), the groove depth (nm), and the track pitch (μm) which satisfy the following relation:

$$0.25 \leq \text{groove width} / \text{track pitch} \leq 0.45$$

$$0.2\lambda/(4n) \leq \text{groove depth} \leq 0.8\lambda/(4n)$$

wherein λ is the wavelength (nm) of the laser beam used for recording and "n" is the refractive index of the substrate.

**20.** A method of producing the optical medium according to any one of claims 1 to 19 characterized in that the step of forming the recording layer comprises the step of vapor depositing a recording layer-constituting material on the substrate.

Fig. 1

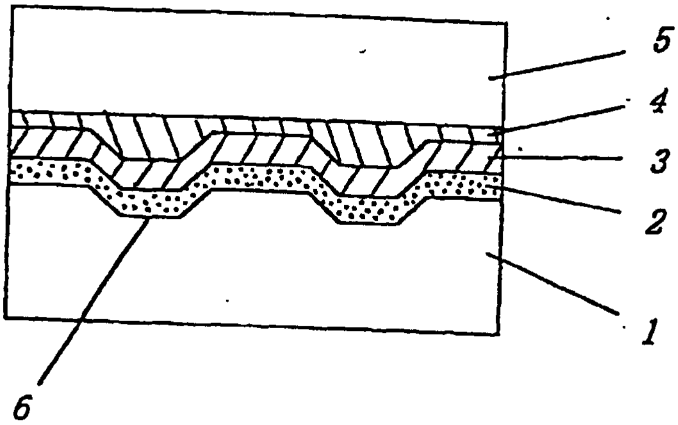
5
4
3
2
1
6

Fig. 2

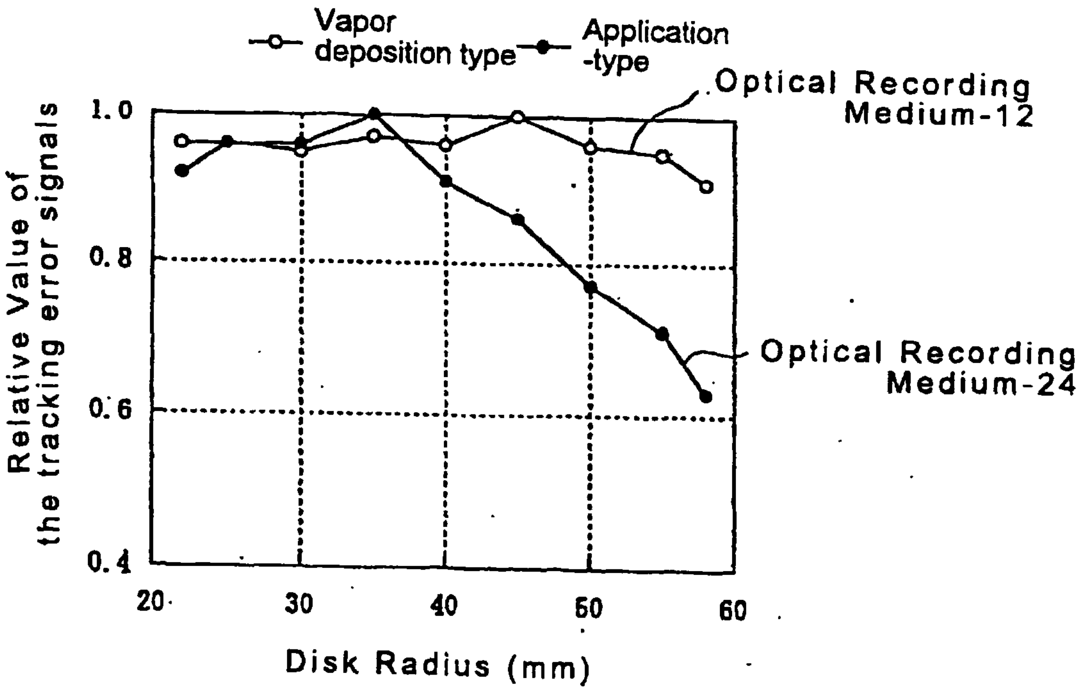
Vapor deposition type
Application -type
Optical Recording Medium-12
Optical Recording Medium-24
Relative Value of the tracking error signals
1.0
0.8
0.6
0.4
20
30
40
50
60
Disk Radius (mm)

## INTERNATIONAL SEARCH REPORT

International application No.
PCT/JP98/03123

A. CLASSIFICATION OF SUBJECT MATTER
Int.Cl$^6$ B41M5/26, G11B7/24, 516, C09K9/02

According to International Patent Classification (IPC) or to both national classification and IPC

B. FIELDS SEARCHED

Minimum documentation searched (classification system followed by classification symbols)
Int.Cl$^6$ B41M5/26

Documentation searched other than minimum documentation to the extent that such documents are included in the fields searched
Jitsuyo Shinan Koho 1926-1998 Toroku Jitsuyo Shinan Koho 1994-1998
Kokai Jitsuyo Shinan Koho 1971-1998

Electronic data base consulted during the international search (name of data base and, where practicable, search terms used)
CAS on-line

C. DOCUMENTS CONSIDERED TO BE RELEVANT

| Category* | Citation of document, with indication, where appropriate, of the relevant passages | Relevant to claim No. |
|---|---|---|
| X<br>Y | JP, 4-361088, A (Mitsubishi Kasei Corp.), 14 December, 1992 (14. 12. 92), Claims ; Par. Nos. [0026], [0027], [0076] to [0088] (Family: none) | 1, 3-18, 20<br>19 |
| Y | JP, 7-304258, A (Sony Corp.), 21 November, 1995 (21. 11. 95), Par. No. [0046] (Family: none) | 2 |
| Y | JP, 9-132626, A (Eastman Kodak Co.), 20 May, 1997 (20. 05. 97), Par. No. [0143] & US, 5786123, A & EP, 750020, A2 | 19 |
| P, X | JP, 9-277703, A (Mitsubishi Kasei Corp.), 28 October, 1997 (28. 10. 97), Claims ; Par. Nos. [0025], [0043] (Family: none) | 1, 3-18, 20 |
| P, X | JP, 10-157301, A (Mitsui Toatsu Chemicals, Inc.), 16 June, 1998 (16. 06. 98), Claims ; Par. Nos. [0055] to [0060] (Family: none) | 1, 3-11, 13-18, 20 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 6 October, 1998 (06. 10. 98) | 20 October, 1998 (20. 10. 98) |
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP98/03123

C (Continuation). DOCUMENTS CONSIDERED TO BE RELEVANT

| Category* | Citation of document, with indication, where appropriate, of the relevant passages | Relevant to claim No. |
|---|---|---|
| P, X | JP, 10-157302, A (Mitsui Toatsu Chemicals, Inc.) 16 June, 1998 (16. 06. 98), Claims ; Par. Nos. [0056] to [0061] (Family: none) | 1, 3-11, 13-18, 20 |

Form PCT/ISA/210 (continuation of second sheet) (July 1992)